# EUROPÄISCHE PATENTANMELDUNG

(11) **EP 4 513 280 A1**
(43) Veröffentlichungstag der Anmeldung: **26.02.2025**
(21) Anmeldenummer: 23192480.4
(22) Anmeldetag: 21.08.2023
(51) Int. Cl.: G05B 13/02, B27N 3/08, G05B 19/408, G05B 19/418, G06N 3/08

(54) **VERFAHREN ZUM BEREITSTELLEN OPTIMIERTER PROZESSPARAMETER EINES PRODUKTIONSVERFAHRENS ZUM HERSTELLEN EINER BAUSTOFFPLATTE**

(71) Anmelder: Siempelkamp Maschinen- und Anlagenbau GmbH, 47803 Krefeld (DE)
(72) Erfinder: Bernardy, Gregor, Dahlem (DE); Rußkamp, Bernd, Willich (DE)
(74) Vertreter: Cohausz & Florack

(57) **Zusammenfassung**

Offenbart wird u.a. ein Verfahren, welches beispielsweise durch zumindest eine Vorrichtung oder ein System umfassend zumindest zwei Vorrichtungen ausgeführt wird. Das Verfahren umfasst ein Erhalten von Informationen zu zumindest einem Produktionsfaktor eines Produktionsverfahrens zum Herstellen einer Baustoffplatte. Das Verfahren umfasst ferner ein Bestimmen, basierend auf den Informationen zu dem zumindest einen Produktionsfaktor und unter Verwendung einer Optimierungsfunktion, zumindest eines optimierten ersten Prozessparameters. Der zumindest eine optimierte erste Prozessparameter basiert dabei auf jeweiligen Werten für zumindest einen ersten Prozessparameter des Produktionsverfahrens, die die Optimierungsfunktion optimieren, oder entspricht diesen. Ferner steht dabei jeder des zumindest einen ersten Prozessparameters des Produktionsverfahrens mit zumindest einem des zumindest einen Produktionsfaktors des Produktionsverfahrens in Zusammenhang. Das Verfahren umfasst ferner ein Bestimmen, unter Verwendung eines mathematischen Modells, jeweiliger Werte für zumindest einen zweiten Prozessparameter des Produktionsverfahrens derart, dass bei einer Ausführung des Produktionsverfahrens basierend auf dem zumindest einen optimierten ersten Prozessparameter und auf den Werten für den zumindest einen zweiten Prozessparameter zumindest eine mit der Baustoffplatte in Zusammenhang stehende Nebenbedingung eingehalten wird. Ferner umfasst das Verfahren ein Bereitstellen des zumindest einen optimierten ersten Prozessparameters und der Werte für den zumindest einen zweiten Prozessparameter zur Verwendung in dem Produktionsverfahren.

## Beschreibung

### Gebiet

Beispielhafte Ausführungsformen der Erfindung betreffen Verfahren, Vorrichtungen, Systeme und Computerprogramme insbesondere zum Bereitstellen optimierter Prozessparameter eines Produktionsverfahrens zum Herstellen einer Baustoffplatte.

### Hintergrund

Die kontinuierliche Herstellung von Werkstoff- und/oder Baustoffplatten, beispielsweise von Holzwerkstoffplatten, umfasst üblicherweise eine Verwendung von komplexen Produktionsanlagen, die eine Mehrzahl von Einheiten oder Abschnitten umfassen, die für jeweilige Produktionsschritte vorgesehen sind. Für jede solcher Einheiten kann eine - üblicherweise große - Anzahl von Prozessparametern jeweilige Prozessbedingungen charakterisieren. So können beispielsweise im Falle einer Faserplattenerzeugung die Prozessparameter Quetschwassermenge, Hackschnitzelmenge, Temperatur Kocher, etc. kennzeichnend für Prozessbedingungen eines Prozessabschnitts der Zerfaserung einer Produktionsanlage zum Herstellen von Holzwerkstoffplatten sein.

Angesichts der üblicherweise sehr großen Anzahl von Prozessparametern von Produktionsverfahren zum Herstellen von Baustoffplatten - und einer damit verbundenen hohen Komplexität einer Steuerung bzw. Regelung derartiger Verfahren - hat sich die Verwendung von Verfahren zur zumindest teilweise autonomen Steuerung bzw. Regelung der genannten Produktionsverfahren gegenüber einer (ausschließlich) manuellen Steuerung bzw. Regelung als vorteilhaft herausgestellt. Derartige autonome Steuerungs-/Regelungsverfahren können beispielsweise ausgehend von einer aktuellen Situation einer Produktionsanlage zum Herstellen von Baustoffplatten automatisiert neue Sollwertvorgaben für Prozessparameter eines entsprechenden Produktionsverfahrens bestimmen und diese anschließend selbsttätig einstellen. Diese Art der autonomen Steuerung bzw. Regelung kann auch als übergeordneter geschlossener Regelkreis bezeichnet werden.

Sowohl bei einer (ausschließlich) manuellen als auch bei einer zumindest teilweise autonomen Steuerung/Regelung der genannten Produktionsverfahren müssen üblicherweise bestimmte Anforderungen eingehalten werden. So sind bei der Herstellung von Baustoffplatten üblicherweise bestimmte vorgegebene Qualitätskriterien für die Baustoffplatten einzuhalten. Zudem ist häufig ein Erreichen vorgegebener Optimierungsziele wie beispielsweise eine Steigerung einer Produktionsgeschwindigkeit oder eine Senkung eines Material- und/oder Energieverbrauchs wünschenswert. Ferner können (maschinen-)technisch bedingte und/oder von einem Anwender vorgegebene Einschränkungen der Steuerung bzw. Regelung zu berücksichtigen sein.

Insbesondere - aber nicht nur - bei einer zumindest teilweise autonomen Steuerung bzw. Regelung von Produktionsverfahren zum Herstellen von Baustoffplatten (beispielsweise in Form eines übergeordneten geschlossenen Regelkreises) stellt die Bestimmung bestmöglicher Prozessparameter bezüglich mehrerer oder aller der vorgenannten Anforderungen angesichts der großen Anzahl von Prozessparametern eine Herausforderung dar.

Eine Aufgabe der vorliegenden Erfindung ist es vor diesem Hintergrund, Verfahren, Vorrichtungen, Systeme und Computerprogramme insbesondere zum Bereitstellen optimierter Prozessparameter eines Produktionsverfahrens zum Herstellen einer Baustoffplatte bereitzustellen. Eine weitere Aufgabe der vorliegenden Erfindung ist es, Verfahren, Vorrichtungen, Systeme und Computerprogramme bereitzustellen, die eine Steuerung und/oder Regelung einer Produktionsanlage zum Herstellen von Baustoffplatten unterstützen.

### Zusammenfassung einiger beispielhafter Ausführungsformen der Erfindung

Gemäß einem beispielhaften Aspekt der Erfindung wird ein Verfahren offenbart, welches beispielsweise durch zumindest eine Vorrichtung oder ein System umfassend zumindest zwei Vorrichtungen ausgeführt wird, wobei das Verfahren umfasst:
- Erhalten von Informationen zu zumindest einem Produktionsfaktor eines Produktionsverfahrens zum Herstellen einer Baustoffplatte;
- Bestimmen, basierend auf den Informationen zu dem zumindest einen Produktionsfaktor und unter Verwendung einer Optimierungsfunktion, zumindest eines optimierten ersten Prozessparameters, wobei der zumindest eine optimierte erste Prozessparameter auf jeweiligen Werten für zumindest einen ersten Prozessparameter des Produktionsverfahrens basiert oder diesen entspricht, die die Optimierungsfunktion optimieren, und wobei jeder des zumindest einen ersten Prozessparameters des Produktionsverfahrens mit zumindest einem des zumindest einen Produktionsfaktors des Produktionsverfahrens in Zusammenhang steht;
- Bestimmen, unter Verwendung eines mathematischen Modells, jeweiliger Werte für zumindest einen zweiten Prozessparameter des Produktionsverfahrens derart, dass bei einer Ausführung des Produktionsverfahrens basierend auf dem zumindest einen optimierten ersten Prozessparameter und auf den Werten für den zumindest einen zweiten Prozessparameter zumindest eine mit der Baustoffplatte in Zusammenhang stehende Nebenbedingung eingehalten wird; und
- Bereitstellen des zumindest einen optimierten ersten Prozessparameters und der Werte für den zumindest einen zweiten Prozessparameter zur Verwendung in dem Produktionsverfahren.

Gemäß diesem genannten Aspekt der Erfindung werden des Weiteren offenbart:
- Ein Computerprogramm, umfassend Programmanweisungen, die einen Prozessor oder mehrere Prozessoren zur Ausführung und/oder Steuerung des Verfahrens gemäß dem genannten Aspekt der Erfindung veranlassen, wenn das Computerprogramm auf dem Prozessor oder den mehreren Prozessoren ausgeführt wird. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung oder ein System aus zumindest zwei Vorrichtungen, eingerichtet zur Ausführung und/oder Steuerung des Verfahrens gemäß dem genannten Aspekt der Erfindung oder umfassend jeweilige Mittel zur Ausführung und/oder Steuerung der Schritte des Verfahrens gemäß dem genannten Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein. Eine Vorrichtung gemäß dem genannten Aspekt der Erfindung kann beispielsweise eine Steuervorrichtung sein, die mit (zumindest mit Teilen) einer Produktionsanlage zum Herstellen von Baustoffplatten, insbesondere zum Steuern von zumindest Teilen eines Produktionsverfahrens zum Herstellen von Baustoffplatten, verbunden ist.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem genannten Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.
- Eine Baustoffplatte, hergestellt durch ein Verfahren umfassend das Verfahren gemäß dem genannten Aspekt der Erfindung.

Im Folgenden werden Eigenschaften des genannten Aspekts - teilweise beispielhaft - beschrieben.

Das Verfahren gemäß dem genannten Aspekt wird beispielsweise durch zumindest eine Vorrichtung oder ein System umfassend zumindest zwei Vorrichtungen ausgeführt. In beispielhaften Ausführungsformen wird das Verfahren von zumindest einer Steuervorrichtung ausgeführt, die mit einer Produktionsanlage zum Herstellen von Baustoffplatten (direkt und/oder indirekt) verbunden ist. In einer beispielhaften Ausführungsform kann das Verfahren von einem System ausgeführt werden, das beispielsweise mehrere Steuervorrichtungen umfasst, wobei jede der Steuervorrichtungen (einige oder alle) Schritte des Verfahrens ausführt. Beispielsweise kann eine Steuervorrichtung eine Verarbeitungsanlage wie einen (oder mehrere) Computer umfassen, der (oder die) an der Produktionsanlage vorgesehen ist (oder sind) (und beispielsweise Sensordaten und/oder Daten von einer oder mehrerer Messeinrichtungen der Produktionsanlage über drahtgebundene und/oder drahtlose Kommunikationsverbindungen empfangen kann) und/oder eine mobile Vorrichtung, wie z.B. ein Tablet-Computer, ein Smartphone o.ä., die eingerichtet ist, zumindest Teile des Verfahrens durchzuführen, und die beispielsweise über eine drahtgebundene und/oder drahtlose Kommunikationsverbindung mit der Verarbeitungsanlage und/oder der Produktionsanlage verbunden ist. Wie weiter in der vorliegenden Offenbarung beschrieben, ist das Verfahren gemäß dem genannten Aspekt in beispielhaften Ausführungsformen ein Verfahren zum Bestimmen und/oder Bereitstellen optimierter Prozessparameter eines Produktionsverfahrens zum Herstellen einer Baustoffplatte.

Das Verfahren gemäß dem genannten Aspekt umfasst einen Schritt des Erhaltens von Informationen zu zumindest einem Produktionsfaktor eines Produktionsverfahrens zum Herstellen einer Baustoffplatte.

Die Herstellung (oder Produktion) von Baustoffplatten - die in Fachkreisen teilweise auch einfach "Werkstoffplatten" genannt werden - findet entweder taktgebunden oder kontinuierlich statt. Bei einer taktgebundenen Herstellung werden die Baustoffplatten als flächenförmige Gegenstände mit in allen drei Raumrichtungen endlichen Abmaßen erzeugt, während die Baustoffplatten, die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit vor, ob der Gesamtprozess als taktgebundenes oder kontinuierliches Verfahren beschrieben wird, da im Falle einer sogenannten taktgebundenen Herstellungsweise die der Verdichtung vorgelagerten Prozessabschnitte, wie beispielsweise die Streuung, häufig ebenfalls als kontinuierliche Teilprozesse ausgelegt sind. Da in den Verdichtungseinheiten, respektive den kombinierten Füge- und Verdichtungseinheiten, im Allgemeinen bei der Baustoffplattenerzeugung auch mit nennenswerten Drücken gearbeitet wird, werden diese Einheiten vom Fachmann meist mit Bezug auf eine Gesamtanlage als "Pressenteil" bezeichnet. Bei der Erzeugung von Baustoffplatten im Sinne der vorliegenden Offenbarung liegen die Arbeitsdrücke hier, abhängig von Material und Größe der zu erzeugenden Werkstoffplatte, meist in Bereichen zwischen etwa 50 N/cm² und ca. 500 N/cm², und dort vorteilhafterweise zwischen 100 N/cm² und 400 N/cm², wenngleich sie im Bereich der Erzeugung von zur Dämmung dienenden Baustoffplatten, so genannten Dämmplatten, bei sehr geringen Dichten auch geringer als 50 N/cm² ausfallen können.

Sowohl in wirtschaftlicher Hinsicht als auch im Hinblick auf ihre technische Einsatzfähigkeit nehmen Baustoffplatten, die wenigstens eine einen naturbasierten Faseranteil aufweisende Schicht aufweisen, unter den Baustoffplatten einen besonderen Stellenwert ein. Unter naturbasierten Fasern bzw. Faseranteilen werden im Sinne der vorliegenden Offenbarung Fasern bzw. Faseranteile verstanden, die einen natürlichen Ursprung haben, also dem Ursprung nach einer Einjahrespflanze oder einer Mehrjahrespflanze entstammen, unabhängig davon, ob die Fasern oder Faseranteile als reine Fasern bspw. zur Produktion von MDF-/HDF-Platten oder deren Schichttypen vorliegen oder Bestandteile von Spänen, Langspänen oder Wafern bilden, die klassischerweise zur Produktion von Span- oder OSB-Platten oder deren Schichttypen dienen. Der im Weiteren auch verwendete Begriff "Holzpartikel" beinhaltet also stets wenigstens naturbasierte Fasern oder Faseranteile.

Derartige Baustoffplatten werden vom Fachmann häufig auch einfach "Holz-Baustoffplatten" genannt, selbst wenn sie eine oder weitere Schichten aufweisen, die nicht auf einem, aus einer Mehrjahrespflanze gewonnenem Rohmaterial basieren. Selbst Baustoffplatten, die lediglich eine oder mehrere Schichten umfassen, die wenigstens anteilig aus aus Einjahrespflanzen gewonnenen Fasern und/oder Faseranteilen bestehen, werden meist als Holz-Baustoffplatten und nur äußerst selten ganz korrekt als "Bast-Baustoffplatten" oder "Gras-Baustoffplatten" bezeichnet.

Solche Holz-Baustoffplatten werden in den unterschiedlichsten Ausführungsformen für unterschiedliche Anwendungszwecke hergestellt. Besonders weitverbreitet sind Spanplatten, OSB-Platten (oriented strand board Platten), MDF-Platten (Mitteldichte Faserplatten) und HDF-Platten (Hochdichte Faserplatten), sowie aus einzelnen Schichten derartiger Verbunde aufgebaute Hybridplatten. Die Benennung der Baustoffplatten hängt dabei von Form und Größe der zum Platten- respektive zum Schichtaufbau verwendeten Fasern bzw. Partikel ab. Von einer Spanplatte spricht der Fachmann, wenn diese aus "feinen" Holzpartikeln erzeugt wird, von einer OSB-Platte dagegen, wenn diese aus "groben" Holzpartikeln erzeugt ist. Unter "feinen" Holzpartikeln versteht der Fachmann im Allgemeinen Partikel, deren maximale Ausdehnung in einer Raumrichtung nicht 60 mm überschreitet; meist werden diese als Späne beschriebenen Partikel sogar mit einer maximalen Ausdehnung von höchsten 25 mm oder gar 20 mm ausgebildet. Unter "groben" Holzpartikeln versteht der Fachmann im Allgemeinen Partikel, deren maximale Ausdehnung in einer Raumrichtung mindestens 60 mm beträgt, meist werden diese als Langspäne beschriebenen Partikel sogar mit einer maximalen Ausdehnung von höchsten 60 mm bis 185 mm, insbesondere von 80 mm bis 140 mm ausgebildet.

MDF- und HDF-Platten, beziehungsweise deren einzelne Schichten, sind dagegen aus (mitteldicht- oder hochdicht verpressten) Fasern gebildet, die meist unter Zwischenschaltung eines chemischen Prozesses, meist einer Art Kochprozess, aus dem Rohmaterial gewonnen werden.

Hybridplatten bestehen aus mehreren Schichten unterschiedlicher Arten und sind häufig dann besonders gut geeignet, wenn die Werkstoffplatte für ihren Einsatzzweck verschiedenen Anforderungen gerecht werden muss.

Derartige Baustoffplatten werden auch dann noch als Holz-Baustoffplatten bezeichnet, wenn sie einzelne Schichten umfassen, die keine Anteile von naturbasierten Fasern und/oder Faseranteilen aufweisen. Meist handelt es sich dann um kaschierte Baustoffplatten, also Holz-Baustoffplatten, die einseitig oder beidseitig außen kaschiert sind. Zur Kaschierung finden meist Kunststoffe Anwendung. Besonders bekannt sind dabei so genannte beschichtete Spanplatten.

Die genannten Arten und Typen von Holz-Baustoffplatten werden also aus Holzpartikeln (Spänen, Langspänen oder Fasern) unterschiedlicher Form und Größe hergestellt, wobei die Holzpartikel durch Stimulierung eigener Adhäsionsmechanismen und Zugabe von Klebstoffen (i.d.R. eines Leimes) im sogenannten Pressenteil einer Baustoffplattenerzeugungsanlage unter Einwirkung von Druck und Temperatur verbunden werden.

In jüngerer Zeit ist man bestrebt neben den zum Nachwachsen viele Jahre benötigenden Holzwerkstoffen auch Einjahrespflanzen, insbesondere grasartige Pflanzen, zur Produktion von Baustoffplatten zu benutzen. Diese Einjahrespflanzen haben den gro-ßen Vorteil des schnellen Wachstums. Somit ist ihre Verwendung besonders ressourcenschonend, und passt besser in das sich weltweit vermehrt ausbildende Umweltbewusstsein. Zudem erfordert der zunehmende Wohlstand in vielen, beispielsweise asiatischen Ländern, die Deckung eines großen Bedarfs an Baustoffplatten für den Wohnungsbau, insbesondere den Wohnungsinnenausbau oder auch für den Möbelbau.

Da Einjahrespflanzen nicht verrinden, bilden ihre Ernteprodukte produktionstechnisch betrachtet zunächst einen homogenes Rohmaterial, dessen Fasern für die Baustoffplattenproduktion durch einen Aufspleißungsprozess gewonnen werden können.

Allerdings gestaltet sich die Verarbeitung von Einjahrespflanzen deutlich komplizierter als die auf Holzpartikeln basierenden Baustoffplatten. So bildet die hohe Ausscheidung von im Herstellungsprozess abrasiv auf den Anlagenbau wirkender Silikate ein großes Hemmnis. Dies erfordert insbesondere hinsichtlich des Anlagebaus deutlich erhöhten Aufwand, beispielsweise durch zusätzliche Prozessschritte, der Armierung bestimmter Anlageteile und einem erhöhten Ersatzteilbedarf. Zudem besteht die Gefahr von Produktionsstillständen.

Nicht zuletzt unterscheiden sich insbesondere auch die mechanischen Eigenschaften von auf aus Einjahrespflanzen hergestellten Partikeln basierenden Platten(-schichten) zu denjenigen von auf Holzpartikeln basierenden Pendants erheblich. Aus der Vielzahl der aufeinander aufbauenden Prozessabschnitte, der Varianz der Anforderungen an die einzelnen Prozessabschnitte abhängig von den herzustellenden Baustoffplattentypen und deren gewünschter Eigenschaften, sowie der innerhalb eines Prozessabschnitts auf die Qualität der zu erzeugenden Baustoffplatte einwirkenden Parametern ergeben sich beinahe beliebig komplexe Abhängigkeitsstrukturen.

Ein Baustoff umfasst in beispielhaften Ausführungsformen einen Holzwerkstoff, einen Dämmstoff, und/oder einen oder mehrere Rohstoffe wie Reisstroh, Bagasse, Bambus, Hanf, Ölpalme. Beispielhafte Baustoffplatten umfassen Spanplatten, Grobspan-, bzw. OSB-Platten und/oder MDF-Platten.

Im Sinne der vorliegenden Offenbarung sind unter dem Begriff Baustoffplatten Platten zu verstehen, die beispielsweise zumindest einen großen Anteil (zum Beispiel mehr als 25 Gew.-%) an zumindest einem der genannten Baustoffe enthalten, im Falle von Holzwerkstoffplatten beispielsweise zumindest einen großen Anteil (zum Beispiel mehr als 50 Gew.-%, insbesondere mehr als 75 Gew.-%, beispielsweise wenigstens 80 Gew.-%) an zellulosehaltigem, beispielsweise lignozellulosehaltigem, Material, beispielsweise Holzspäne, aufweisen. Solche Baustoffplatten können weitere Materialien wie Kunststoffmaterialien umfassen, die beispielsweise zumindest teilweise in Partikel- und/oder Faserform vorliegen können.

Eine Produktionsanlage zur Herstellung von Baustoffplatten kann somit insbesondere eine Produktionsanlage zur Herstellung von Holzwerkstoffplatten (oder Holz-Ersatz-Baustoffplatten) umfassen oder einer solchen entsprechen. Derartige Produktionsanlagen umfassen üblicherweise mehrere Produktionseinheiten oder -abschnitte, beispielsweise einen Abschnitt (beispielsweise einen Bunker) zum Lagern, Entrinden und/oder Hacken, einen Abschnitt zur Hackschnitzelwäsche, einen Abschnitt zur Zerfaserung und/oder Zerspanung und Beleimung, einen Abschnitt zur Faser- und/oder Spantrocknung, einen Abschnitt zur Mattenformung, und/oder einen Abschnitt zur Heißverpressung.

Produktionsbedingungen insbesondere in einzelnen Abschnitten und/oder bei einzelnen Einheiten der Produktionsanlage können durch entsprechende Prozessparameter charakterisiert werden/sein. Eine Anzahl von Prozessparametern in einer Produktionsanlage kann typischerweise groß sein (z. B. bis zu oder sogar mehr als 2000, beispielsweise 3500 Prozessparameter, in einer typischen Produktionsanlage). Hierbei versteht sich, dass Werte für Prozessparameter im Sinne der vorliegenden Offenbarung insbesondere Istwerten und/oder Sollwerten für die Prozessparameter entsprechen. So weist die Produktionsanlage in beispielhaften Ausführungsformen zumindest einen Sensor und/oder zumindest eine Messeinrichtung auf. Beispielsweise kann die Produktionsanlage ein oder mehrere Drucksensoren, Temperatursensoren und/oder Feuchtigkeitssensoren aufweisen. Die Produktionsanlage kann weiter beispielsweise eine oder mehrere Messeinrichtungen zum Vermessen von Eigenschaften der Baustoffplatten, beispielsweise zum Vermessen von Eigenschaften von Holzspänen, umfassen. Es versteht sich aber, dass die vorliegende Offenbarung nicht auf solche Sensoren und/oder Messeinrichtungen beschränkt ist. Die Produktionsanlage kann beispielsweise zumindest einen Produktionsabschnitt aufweisen, der zumindest einen Sensor aufweist. Beispielsweise kann ein Pressabschnitt einen Drucksensor aufweisen, wobei entsprechende Druckmesswerte dem Prozessparameter Druck entsprechen können. Alternativ oder zusätzlich kann ein eingestellter Sollwert des Drucks am entsprechenden Pressabschnitt dem Prozessparameter Druck entsprechen.

Mit anderen Worten wird das Verfahren in einer beispielhaften Ausführungsform durch eine Steuervorrichtung einer Produktionsanlage oder durch ein System, das eine solche Steuervorrichtung umfasst, ausgeführt, wobei die Produktionsanlage zumindest einen Sensor und/oder zumindest eine Messeinrichtung aufweist, der, bzw. die eingerichtet ist, zumindest einen Sensormesswert und/oder einen Messwert der zumindest einen Messeinrichtung als Soll- oder Istwert für einen entsprechenden Prozessparameter auszugeben, und der eine entsprechende Prozessbedingung beim Herstellen der zumindest einen Baustoffplatte durch die Produktionsanlage charakterisiert.

Beispielhafte, die vorliegende Offenbarung nicht einschränkende Prozessparameter insbesondere des Abschnitts zur Zerfaserung und Beleimung können eine Quetschwassermenge, eine Dampfzugabe eines Kochers, ein Füllstand des Kochers, eine Temperatur des Kochers, ein Dampfdruck des Kochers, eine Kochzeit mit dem Kocher, eine Hackschnitzelmenge, eine Leimzugabe oder Paraffinzugabe, etc., umfassen. Beispielhafte, die vorliegende Offenbarung nicht einschränkende Prozessparameter insbesondere des Abschnitts zur Mattenformung können eine Faseraustragsmenge, eine Streuhöhe, eine Formbandgeschwindigkeit, ein Flächengewicht der Matte, eine Mattenfeuchte, eine Streubreite, ein Vorpressdruck, eine Vorpressdistanz, eine Besäumungsbreite, eine Mattendichte, eine Sprühwassermenge, etc., umfassen. Es versteht sich, dass für weitere Einheiten und/oder Abschnitte einer Produktionsanlage eigene Prozessparameter existieren, die entsprechende Produktionsbedingungen dieser weiteren Einheiten und/oder Abschnitte charakterisieren.

Die Produktionsbedingungen, die bei einer Produktionsanlage beim/zum Herstellen einer Baustoffplatte herrschen/eingestellt sind, haben zumindest teilweise einen Einfluss auf Eigenschaften der produzierten Baustoffplatte. Solche (Qualitäts-)Eigenschaften einer Baustoffplatte können insbesondere durch Qualitätsmerkmale, bzw. Qualitätsparameter, charakterisiert werden. Im Sinne der vorliegenden Offenbarung können Qualitätsmerkmale bzw. Qualitätsparameter insbesondere eine Querzugfestigkeit, ein oder mehrere Biege-E-Module, eine Rohdichte, eine Biegefestigkeit, eine Abhebefestigkeit und/oder eine Dickenquellung umfassen, wobei diese Beispiele nicht als einschränkend zu verstehen sind. So können weitere Qualitätsmerkmale, bzw. Qualitätsparameter, vorgesehen sein.

Eine Produktionsanlage kann über geeignete Sensoren und/oder Messeinrichtungen an verschiedenen Produktionsabschnitten verfügen, so dass Produktionsbedingungen beim Herstellen einer Baustoffplatte an den verschiedenen Produktionsabschnitten festgehalten werden können, und einer produzierten Baustoffplatte zugeordnet werden können. So können Sensordaten und/oder Messdaten einer Messeinrichtung mit einem entsprechenden Zeitstempel einer produzierten Baustoffplatte zugeordnet als Datensatz gespeichert werden. Solche zeitlich zugeordneten Datensätze/Datenvektoren enthalten die Prozessbedingungen oder Prozesszustände, unter denen die entsprechende Baustoffplatte entstanden ist.

Unter dem zumindest einen Produktionsfaktor des Produktionsverfahrens können insbesondere bei der Herstellung der Baustoffplatte verwendete materielle und/oder immaterielle Güter verstanden werden, deren Einsatz zur Herstellung der Baustoffplatte beispielsweise erforderlich sein kann. In beispielhaften Ausführungsformen umfasst der zumindest eine Produktionsfaktor zumindest einen Werkstoff zum Herstellen der Baustoffplatte und/oder entspricht diesem. Der zumindest eine Werkstoff kann beispielsweise zumindest einen Rohstoff (z.B. Holz, Reisstroh, Bagasse, Bambus, Hanf, Ölpalme), zumindest einen Hilfsstoff (z.B. ein Klebstoff oder ein Leim) und/oder zumindest einen Betriebsstoff (z.B. Gas, Öl, Biomasse, elektrischer Strom) umfassen oder diesem entsprechen.

Die Informationen zu dem zumindest einen Produktionsfaktor umfassen in beispielhaften Ausführungsformen Preisinformationen zu dem zumindest einen Produktionsfaktor. Preisinformationen zu einem Produktionsfaktor können beispielsweise zumindest einen Wert umfassen, der einen Preis, insbesondere einen Einkaufspreis, einer bestimmten Menge des Produktionsfaktors repräsentiert. Der Preis (einer bestimmten Menge) eines Produktionsfaktors kann dabei beispielsweise einem Durchschnittspreis (der bestimmten Menge) des Produktionsfaktors (z.B. einem zeitlichen Mittelwert des Preises) und/oder einem aktuellen Preis (der bestimmten Menge) des Produktionsfaktors entsprechen (z.B. einem Preis, der während einer Ausführung, Steuerung und/oder Regelung des Produktionsverfahrens zumindest zeitweise gültig ist bzw. am Markt aufgerufen wird). Wenn der zumindest eine Produktionsfaktor also beispielsweise Holz entspricht, umfassen die Informationen zu dem zumindest einen Produktionsfaktor beispielsweise zumindest einen Wert, der einen durchschnittlichen und/oder aktuellen (Einkaufs-)preis für (eine bestimmte Menge) Holz repräsentiert (z.B. der Preis für ein Kilogramm Holz).

Alternativ oder zusätzlich umfassen die Informationen zu dem zumindest einen Produktionsfaktor in beispielhaften Ausführungsformen Emissionsinformationen zu dem zumindest einen Produktionsfaktor. Emissionsinformationen zu einem Produktionsfaktor können beispielsweise zumindest einen Wert umfassen, der eine Menge (z.B. in Tonnen) und/oder Art (z.B. Kohlendioxid, Methan, etc.) von Treibhausgasen repräsentiert, die infolge der Zurverfügungstellung und/oder Verwendung (einer bestimmten Menge) des zumindest einen Produktionsfaktors in dem Produktionsverfahren emittiert wurden/werden. Die Menge an Treibhausgasen kann dabei beispielsweise einer durchschnittlichen Menge (also beispielsweise einem statistischen Mittelwert mehrerer historisch bekannter Mengen) an Treibhausgasen und/oder einer anhand eines Modells geschätzten Menge an Treibhausgasen entsprechen, die infolge der Zurverfügungstellung und/oder Verwendung (einer bestimmten Menge) des zumindest einen Produktionsfaktors emittiert wurden/werden. Wenn der zumindest eine Produktionsfaktor beispielsweise einem Holz, Leim und/oder Energieträger (z.B. Gas, Öl, Biomasse, elektrischer Strom) entspricht, umfassen die Informationen zu dem zumindest einen Produktionsfaktor also beispielsweise zumindest einen Wert, der eine durchschnittliche und/oder anhand eines Modells geschätzte Menge an Treibhausgasen und/oder deren Art repräsentiert, die infolge der Zurverfügungstellung und/oder Verwendung (einer bestimmten Menge) des Holzes, Leims und/oder Energieträgers emittiert wurden/werden.

Alternativ oder zusätzlich umfassen die Informationen zu dem zumindest einen Produktionsfaktor in beispielhaften Ausführungsformen Nachhaltigkeitsinformationen zu dem zumindest einen Produktionsfaktor. Nachhaltigkeitsinformationen zu einem Produktionsfaktor können beispielsweise zumindest einen Wert umfassen, der eine Menge des Produktionsfaktors angibt, die in dem Produktionsverfahren zum Herstellen einer Baustoffplatte benötigt und/oder verbraucht wird (eine solche Menge kann beispielsweise als Ressourcenverbrauch bezeichnet werden). Alternativ oder zusätzlich können Nachhaltigkeitsinformationen zu einem Produktionsfaktor beispielsweise zumindest einen Wert umfassen, der einen Anteil einer in dem Produktionsverfahren benötigten und/oder verbrauchten Menge eines Produktionsfaktors repräsentiert, der (z.B. zuvor) mittels Recycling erhalten wurde. Ein solcher Anteil kann beispielsweise als Recyclinganteil des Produktionsfaktors bezeichnet werden. Der Recyclinganteil kann beispielsweise einem Anteil eines Recyclats und/oder Regenerats an einer in dem Produktionsverfahren benötigten und/oder verbrauchten Menge eines Produktionsfaktors entsprechen (z.B. Anteil recyceltes Holz an benötigter Menge Holz).

In beispielhaften Ausführungsformen sind die Informationen zu dem zumindest einen Produktionsfaktor und/oder von diesen Informationen umfasste Werte zeitlich variabel (beispielsweise können sich ein Marktpreis eines Holzes, eine typische Menge von Treibhausgasen infolge einer Zurverfügungstellung des Holzes und/oder ein Recyclinganteil des Holzes mit der Zeit ändern, z.B. durch eine veränderte Marktsituation und/oder durch im Laufe der Zeit veränderte Produktionsbedingungen bei der Holzproduktion).

In beispielhaften Ausführungsformen umfasst das Erhalten der Informationen zu dem zumindest einen Produktionsfaktor ein Empfangen, Abrufen und/oder Auslesen der Informationen, beispielsweise von einer externen Vorrichtung und/oder aus einem computerlesbaren Speichermedium. Infolge des Erhaltens der Informationen zu dem zumindest einen Produktionsfaktor kann eine (Steuer-)vorrichtung, die das Verfahren gemäß dem genannten Aspekt ausführt, beispielsweise auf die Informationen und/oder auf von den Informationen umfasste Werte zugreifen und/oder die Informationen bzw. Werte in zumindest einem weiteren Schritt des Verfahrens verwenden.

Das Verfahren gemäß dem genannten Aspekt umfasst einen Schritt des Bestimmens, basierend auf den Informationen zu dem zumindest einen Produktionsfaktor und unter Verwendung einer Optimierungsfunktion, zumindest eines optimierten ersten Prozessparameters, wobei der zumindest eine optimierte erste Prozessparameter auf jeweiligen Werten für zumindest einen ersten Prozessparameter des Produktionsverfahrens basiert oder diesen entspricht, die die Optimierungsfunktion optimieren. Mit anderen Worten kann der zumindest eine optimierte erste Prozessparameter also beispielsweise den Werten für den zumindest einen ersten Prozessparameter entsprechen, die die Optimierungsfunktion optimieren. Alternativ kann der zumindest eine optimierte erste Prozessparameter beispielsweise Werten entsprechen, die sich um weniger als ein vorgegebenes Maß von den Werten unterschieden, die die Optimierungsfunktion optimieren. Der zumindest eine optimierte erste Prozessparameter kann also beispielsweise geringfügig (z.B. um weniger als ein vorgegebenes Maß) von den Werten, die die Optimierungsfunktion optimieren, abweichen. Eine solche Abweichung kann beispielsweise durch eine Produktionsanlage zur Ausführung des Produktionsverfahrens (z.B. aufgrund einer Produktionstoleranz) bedingt und/oder durch einen Anwender des Produktionsverfahrens vorgegeben sein. Unter Werten, die eine Funktion optimieren, können beispielsweise optimale Werte der Funktion verstanden werden. Folglich kann der zumindest eine optimierte erste Prozessparameter also beispielsweise optimalen Werten für den zumindest einen ersten Prozessparameter entsprechen. Es versteht sich aber, dass unter einem Optimieren alternativ auch ein Verbessern soweit wie möglich verstanden werden kann. Folglich kann der zumindest eine optimierte erste Prozessparameter alternativ beispielsweise Werten entsprechen, die einen Funktionswert der Optimierungsfunktion soweit wie möglich verbessern (diese können z.B. als bestmögliche Werte bezeichnet werden).

Mit anderen Worten hängt die Optimierungsfunktion in beispielhaften Ausführungsformen von dem zumindest einem ersten Prozessparameter ab und/oder repräsentiert der zumindest eine optimierte erste Prozessparameter Werte für den zumindest einen ersten Prozessparameter, die die Optimierungsfunktion optimieren.

Der zumindest eine optimierte erste Prozessparameter umfasst in beispielhaften Ausführungsformen Werte oder entspricht diesen, basierend auf denen der zumindest eine erste Prozessparameter (z.B. zukünftig) eingestellt wird. Unter dem Einstellen eines Prozessparameters basierend auf einem Wert kann beispielsweise verstanden werden, dass der Wert für den Prozessparameter eingestellt wird (z.B. als Soll- oder Istwert). Alternativ kann unter dem Einstellen eines Prozessparameters basierend auf einem Wert beispielsweise verstanden werden, dass ein Wert für den Prozessparameter eingestellt wird (z.B. als Soll- und/oder Istwert), der um weniger als ein vorgegebenes Maß von dem Wert abweicht, basierend auf dem der Prozessparameter eingestellt wird.

In beispielhaften Ausführungsformen entspricht der zumindest eine erste Prozessparameter zumindest einem von:
- Anlagengeschwindigkeit einer Produktionsanlage zum Herstellen von Baustoffplatten;
- Flächengewicht einer herzustellenden Baustoffplatte;
- Dichte einer herzustellenden Baustoffplatte;
- Beleimungsfaktor;
- Energieträgereinsatz;
- Vorlauftemperatur eines Thermoöls.

In beispielhaften Ausführungsformen umfasst das Bestimmen des zumindest einen optimierten ersten Prozessparameters ein Optimieren der Optimierungsfunktion. Unter dem Optimieren einer Funktion im Sinne dieser Offenbarung kann beispielsweise ein Bestimmen von Variablen derart, dass die Funktion maximiert oder minimiert wird, verstanden werden. Vorliegend kann unter dem Optimieren der Optimierungsfunktion also beispielsweise verstanden werden, dass Werte für den zumindest einen ersten Prozessparameter (der z.B. als zumindest eine Variable der Optimierungsfunktion verstanden werden kann) derart bestimmt werden, dass die Optimierungsfunktion optimiert wird. Das Optimieren (also z.B. das Maximieren oder das Minimieren) der Optimierungsfunktion kann dabei beispielsweise analytisch und/oder numerisch erfolgen. In beispielhaften Ausführungsformen umfasst das Bestimmen des zumindest einen optimierten ersten Prozessparameters daher ein exaktes (beispielsweise analytisches) und/oder näherungsweises (beispielsweise numerisches) Bestimmen des zumindest einen optimierten ersten Prozessparameters.

Dass das Bestimmen des zumindest einen optimierten ersten Prozessparameters unter Verwendung der Optimierungsfunktion erfolgt, kann also beispielsweise so verstanden werden, dass der zumindest eine optimierte erste Prozessparameter bestimmt wird, indem bestimmt wird, welche Werte für den zumindest einen ersten Prozessparameter die Optimierungsfunktion optimieren, wie vorstehend beschrieben.

In beispielhaften Ausführungsformen umfasst das Verfahren weiter ein Erhalten der Optimierungsfunktion. Das Erhalten der Optimierungsfunktion kann beispielsweise ein Empfangen, Abrufen und/oder Auslesen von Informationen, die die Optimierungsfunktion repräsentieren, umfassen, beispielsweise von einer externen Vorrichtung oder aus einem computerlesbaren Speichermedium. Die Informationen, die die Optimierungsfunktion repräsentieren, können beispielsweise Werte für zumindest einen Parameter der Optimierungsfunktion umfassen. Mit anderen Worten sind die Informationen, die die Optimierungsfunktion repräsentieren, in beispielhaften Ausführungsformen geeignet, die Optimierungsfunktion zu definieren. Alternativ oder zusätzlich umfasst das Erhalten der Optimierungsfunktion in beispielhaften Ausführungsformen ein Bestimmen der Optimierungsfunktion, beispielsweise durch eine (Steuer-)vorrichtung, die das Verfahren gemäß dem genannten Aspekt ausführt.

In beispielhaften Ausführungsformen umfasst die Optimierungsfunktion eine Kostenfunktion und/oder entspricht einer Kostenfunktion. Ein Funktionswert einer Kostenfunktion kann beispielsweise Kosten für das Herstellen einer oder mehrerer Baustoffplatten in Abhängigkeit von jeweiligen Werten für zumindest einen ersten Prozessparameter des Produktionsverfahrens repräsentieren. In beispielhaften Ausführungsformen wird die Kostenfunktion durch den zumindest einen optimierten ersten Prozessparameter minimiert. Auf diese Weise kann der zumindest eine optimierte erste Prozessparameter vorteilhaft beispielsweise die Kosten für das Herstellen der Baustoffplatte(n) reduzieren.

Alternativ oder zusätzlich umfasst die Optimierungsfunktion in beispielhaften Ausführungsformen eine Gewinnfunktion und/oder entspricht einer Gewinnfunktion. Ein Funktionswert einer Gewinnfunktion kann beispielsweise einen Gewinn repräsentieren, der durch einen Verkauf einer oder mehrerer Baustoffplatten unter Berücksichtigung der Kosten zur Herstellung der Baustoffplatte(n) in Abhängigkeit von jeweiligen Werten für zumindest einen ersten Prozessparameter des Produktionsverfahrens voraussichtlich erzielt werden wird. In beispielhaften Ausführungsformen wird die Gewinnfunktion durch den zumindest einen optimierten ersten Prozessparameter maximiert. Auf diese Weise kann der zumindest eine optimierte erste Prozessparameter vorteilhaft beispielsweise den (voraussichtlich) erzielbaren Gewinn unter Berücksichtigung der Kosten zur Herstellung der Baustoffplatte maximieren. Die Gewinnfunktion kann beispielsweise von Preisinformationen zu der Baustoffplatte abhängen. So kann die Gewinnfunktion in beispielhaften Ausführungsformen von einem Preis, insbesondere einem Verkaufspreis, der Baustoffplatte abhängen.

In beispielhaften Ausführungsformen umfasst das Verfahren gemäß dem genannten Aspekt daher ferner:
- Erhalten von Preisinformationen zu der Baustoffplatte.

Preisinformationen zu der Baustoffplatte können beispielsweise zumindest einen Wert umfassen, der einen Preis, insbesondere einen Verkaufspreis, der Baustoffplatte repräsentiert. Der Preis der Baustoffplatte kann dabei beispielsweise einem Durchschnittspreis (also beispielsweise einem zeitlichen Mittel eines Preises) und/oder einem aktuellen Preis (also beispielsweise einem Preis, der während einer Ausführung, Steuerung und/oder Regelung des Produktionsverfahrens zumindest zeitweise gültig ist, z.B. am Markt erzielt werden kann) der Baustoffplatte entsprechen. Hierbei können beispielsweise Eigenschaften (z.B. Qualitätsmerkmale) der hergestellten Baustoffplatte berücksichtigt werden. Wenn das Produktionsverfahren beispielsweise ein Produktionsverfahren zum Herstellen einer OSB-Platte mit vorgegebenen Eigenschaften ist, können die Preisinformationen zu der Baustoffplatte beispielsweise zumindest einen Wert umfassen, der den durchschnittlichen und/oder aktuellen Preis einer OSB-Platte mit diesen vorgegebenen Eigenschaften repräsentiert.

Die obigen Erläuterungen zu dem Schritt des Erhaltens von Informationen zu dem zumindest einen Produktionsfaktor gelten für den Schritt des Erhaltens von Preisinformationen entsprechend. So kann das Erhalten der Preisinformationen beispielsweise ein Empfangen, Abrufen und/oder Auslesen der Preisinformationen, beispielsweise von einer externen Vorrichtung oder aus einem computerlesbaren Speichermedium umfassen. Infolge des Erhaltens der Preisinformationen kann eine (Steuer-)vorrichtung, die das Verfahren gemäß dem genannten Aspekt ausführt, beispielsweise auf die Preisinformationen zugreifen und/oder die Preisinformationen in zumindest einem weiteren Schritt des Verfahrens verwenden.

Alternativ oder zusätzlich umfasst die Optimierungsfunktion in beispielhaften Ausführungsformen eine Emissionsfunktion und/oder entspricht einer Emissionsfunktion. Ein Funktionswert einer Emissionsfunktion kann beispielsweise eine Menge von Treibhausgasen repräsentieren (z.B. in Tonnen COz-Äquivalent), die infolge der Zurverfügungstellung und/oder Verwendung (einer bestimmten Menge) zumindest eines Produktionsfaktors in dem Produktionsverfahren zum Herstellen einer Baustoffplatte emittiert werden. In beispielhaften Ausführungsformen wird die Emissionsfunktion durch den zumindest einen optimierten ersten Prozessparameter minimiert. Auf diese Weise können die optimierten ersten Prozessparameter es beispielsweise vorteilhaft ermöglichen, Emissionen (z.B. COz Emissionen) zu verringern, die bei der Herstellung der Baustoffplatte entstehen.

Alternativ oder zusätzlich umfasst die Optimierungsfunktion in beispielhaften Ausführungsformen eine Nachhaltigkeitsfunktion und/oder entspricht einer Nachhaltigkeitsfunktion. Ein Funktionswert einer Nachhaltigkeitsfunktion kann beispielsweise einem Wert entsprechen, der ein Maß für eine Nachhaltigkeit bei der Herstellung der Baustoffplatten repräsentiert. Der Funktionswert der Nachhaltigkeitsfunktion kann beispielsweise von einer Menge an Ressourcen (beispielhafte Produktionsfaktoren) abhängen, die in dem Produktionsverfahren zum Herstellen einer Baustoffplatte benötigt und/oder verbraucht werden (eine solche Menge kann beispielsweise als Ressourcenverbrauch des Produktionsverfahrens bezeichnet werden). Alternativ oder zusätzlich kann der Funktionswert der Nachhaltigkeitsfunktion beispielsweise von einem Wert abhängen, der einen Recyclinganteil des Produktionsverfahrens repräsentiert. Der Recyclinganteil kann dabei beispielsweise einem Anteil an einer in dem Produktionsverfahren benötigten und/oder verbrauchten Menge eines Produktionsfaktors entsprechen, die (z.B. zuvor) mittels Recycling erhalten wurde. Der Recyclinganteil kann also z.B. einem Anteil eines Recyclats und/oder Regenerats an einer in dem Produktionsverfahren benötigten und/oder verbrauchten Menge eines Produktionsfaktors entsprechen (z.B. Anteil recyceltes Holzes an benötigter Menge Holz).

In beispielhaften Ausführungsformen wird die Nachhaltigkeitsfunktion durch den zumindest einen optimierten ersten Prozessparameter minimiert oder maximiert. Auf diese Weise kann der zumindest eine optimierte erste Prozessparameter es beispielsweise vorteilhaft ermöglichen, einen Ressourcenverbrauch des Produktionsverfahrens zu reduzieren und/oder einen Recyclinganteil zu erhöhen, und so die Nachhaltigkeit des Produktionsverfahrens zu verbessern.

In beispielhaften Ausführungsformen umfasst die Optimierungsfunktion also zumindest eines von:
- einer Kostenfunktion;
- einer Gewinnfunktion;
- einer Emissionsfunktion; und/oder
- einer Nachhaltigkeitsfunktion.

Es versteht sich, dass eine Optimierungsfunktion im Sinne der vorliegenden Offenbarung einem einzigen der oben genannten Beispiele von Optimierungsfunktionen entsprechen kann oder mehrere der oben genannten Beispiele von Optimierungsfunktionen umfassen kann. So kann die Optimierungsfunktion beispielsweise sowohl eine Kostenfunktion als auch eine Emissionsfunktion oder sowohl eine Kostenfunktion als auch eine Nachhaltigkeitsfunktion umfassen.

In beispielhaften Ausführungsformen wird die Kostenfunktion und/oder die Gewinnfunktion minimiert (Kostenfunktion) bzw. maximiert (Gewinnfunktion), wobei (z.B. gleichzeitig) ein Funktionswert der Emissionsfunktion und/oder der Nachhaltigkeitsfunktion zumindest einen vorgegebenen Schwellwert nicht überschreitet (Emissionsfunktion) oder unterschreitet (Nachhaltigkeitsfunktion). Alternativ kann die Emissionsfunktion und/oder die Nachhaltigkeitsfunktion in beispielhaften Ausführungsformen minimiert (Emissionsfunktion) bzw. maximiert (Nachhaltigkeitsfunktion) werden, wobei (z.B. gleichzeitig) ein Funktionswert der Kostenfunktion und/oder der Gewinnfunktion einen vorgegebenen Schwellwert nicht überschreitet (Kostenfunktion) bzw. unterschreitet (Gewinnfunktion). Mit anderen Worten kann also beispielsweise eine zu optimierende Größe (Kosten, Gewinn, Emissionen, Nachhaltigkeit) optimiert werden, während gleichzeitig eine weitere der zu optimierenden Größe zumindest einen vorgegebenen Schwellwert nicht über- bzw. unterschreitet (abhängig davon, ob eine Minimierung oder eine Maximierung der zu optimierenden Größe gewünscht ist).

Es versteht sich, dass die oben genannten Beispiele von Optimierungsfunktionen lediglich nicht-einschränkende Beispiele darstellen. Eine Optimierungsfunktion im Sinne der vorliegenden Offenbarung kann grundsätzlich eine beliebige Funktion umfassen oder dieser entsprechen, deren Funktionswert eine Größe repräsentiert, die optimiert (z.B. maximiert oder minimiert) werden soll.

Gemäß dem genannten Aspekt steht jeder des zumindest einen ersten Prozessparameters mit zumindest einem des zumindest einen Produktionsfaktors des Produktionsverfahrens in Zusammenhang. Mit anderen Worten hängt in beispielhaften Ausführungsformen jeder des zumindest einen ersten Prozessparameters mit einem oder mehreren Produktionsfaktoren des Produktionsverfahrens (z.B. unmittelbar) zusammen. So hängt beispielsweise der beispielhafte Prozessparameter Flächengewicht Holz mit dem beispielhaften Produktionsfaktor Holz zusammen (z.B. kann ein höheres gewünschtes/erforderliches Flächengewicht einen größeren Holzbedarf bedingen). Ferner hängt beispielsweise der beispielhafte Prozessparameter Beleimungsfaktor mit dem beispielhaften Produktionsfaktor Leim zusammen (z.B. kann ein größerer gewünschter/erforderlicher Beleimungsfaktor einen höheren Leimbedarf bedingen). Ferner hängt beispielsweise der beispielhafte Prozessparameter Vorlauftemperatur Thermoöl mit den beispielhaften Produktionsfaktoren Gas, Öl, Biomasse und/oder elektrischem Strom zusammen (z.B. kann eine höhere gewünschte/erforderliche Vorlauftemperatur Thermoöl einen höheren Energiebedarf bedingen, der dann z.B. durch eine größere Menge der genannten Energieträger gedeckt werden muss). In beispielhaften Ausführungsformen hängt also ein jeweiliger Bedarf an einem jeweiligen Produktionsfaktor des Produktionsverfahrens (z.B. direkt oder indirekt) von einem jeweiligen Wert zumindest eines des zumindest einen ersten Prozessparameters ab.

In beispielhaften Ausführungsformen umfassen die Informationen zu dem zumindest einen Produktionsfaktor Werte, die für den mit dem jeweiligen Produktionsfaktor in Zusammenhang stehenden Prozessparameter jeweils als Faktor, insbesondere als Gewichtungsfaktor, in die Optimierungsfunktion eingehen. Hierzu können die Informationen zu dem zumindest einen Produktionsfaktor beispielsweise Werte umfassen, die (z.B. zeitlich variable Parameter) Parameter der Optimierungsfunktion repräsentieren. Ein Parameter der Optimierungsfunktion kann beispielsweise einem Koeffizienten eines von der Optimierungsfunktion umfassten mathematischen Ausdrucks entsprechen. Beispielsweise können die Kosten für einen Leim (in Ausführungsformen, in denen die Optimierungsfunktion eine Kostenfunktion und ein Produktionsfaktor Leim ist) von dem beispielhaften Prozessparameter Beleimungsfaktor und von einem Preis für den Leim abhängen. Dabei kann der beispielhafte Prozessparameter Beleimungsfaktor beispielsweise als (z.B. steuer- und/oder regelbare) Variable der Kostenfunktion verstanden werden (z.B. da der Beleimungsfaktor in dem Produktionsverfahren eingestellt werden kann), während der Preis für den Leim beispielsweise als (z.B. nicht steuer- und/oder regelbarer, aber zeitlich variabler) Parameter der Kostenfunktion verstanden werden kann (z.B. da der Preis für den Leim zeitlich variabel ist, aber nicht eingestellt werden kann). Mit anderen Worten stellt der zumindest eine erste Prozessparameter in beispielhaften Ausführungsformen eine kostenrelevante, regelbare Prozessgröße dar und/oder umfassen die Informationen zu dem zumindest einen Produktionsfaktor Werte für eine kostenrelevante, nicht regelbare Prozessgröße. Beispielsweise kann ein Preis für einen Leim als Koeffizient (oder Gewichtungsfaktor) für den beispielhaften Prozessparameter Beleimungsfaktor dienen. So kann ein von einer Kostenfunktion umfasster Ausdruck, der die Kosten für einen Leim repräsentiert, beispielsweise den Preis für den Leim als Koeffizienten und den beispielhaften Prozessparameter Beleimungsfaktor als Variable umfassen (der Ausdruck kann z.B. das Produkt aus Leimpreis und Beleimungsfaktor umfassen). Es versteht sich, dass die in dem vorstehenden Beispiel genannte Kostenfunktion ebenso wie der Prozessparameter Beleimungsfaktor sowie der Produktionsfaktor Leim lediglich beispielhaft sind.

In beispielhaften Ausführungsformen repräsentieren die ersten Prozessparameter also Variablen der Optimierungsfunktion und/oder umfassen die Informationen zu dem zumindest einen Produktionsfaktor Werte für (z.B. zeitlich variable) Parameter der Optimierungsfunktion. Dass das Bestimmen des zumindest einen optimierten ersten Prozessparameters basierend auf den (erhaltenen) Informationen zu dem zumindest einen Produktionsfaktor erfolgt, kann folglich beispielsweise so verstanden werden, dass von den Informationen zu dem zumindest einen Produktionsfaktor umfasste Werte als Parameter der Optimierungsfunktion in eine Optimierung der Optimierungsfunktion eingehen.

Das Verfahren gemäß dem genannten Aspekt umfasst ferner einen Schritt des Bestimmens, unter Verwendung eines mathematischen Modells, jeweiliger Werte für zumindest einen zweiten Prozessparameter des Produktionsverfahrens derart, dass bei einer Ausführung des Produktionsverfahrens basierend auf dem zumindest einen optimierten ersten Prozessparameter und auf den Werten für den zumindest einen zweiten Prozessparameter zumindest eine mit der Baustoffplatte in Zusammenhang stehende Nebenbedingung eingehalten wird.

Die Ausführung des Produktionsverfahrens basierend auf dem zumindest einen optimierten ersten Prozessparameter und auf den Werten für den zumindest einen zweiten Prozessparameter entspricht in beispielhaften Ausführungsformen einer Ausführung des Produktionsverfahrens unter Verwendung der genannten Parameter/Werte. Die Ausführung des Produktionsverfahrens unter Verwendung der genannten Parameter/Werte kann beispielsweise ein zumindest zeitweises Einstellen der genannten Parameter/Werte in dem Produktionsverfahren (z.B. als Sollwerte) umfassen.

In alternativen beispielhaften Ausführungsformen entspricht die Ausführung des Produktionsverfahrens basierend auf dem zumindest einen optimierten ersten Prozessparameter und auf den Werten für den zumindest einen zweiten Prozessparameter einer Ausführung des Produktionsverfahrens unter Verwendung jeweiliger Werte für den zumindest einen ersten bzw. zweiten Prozessparameter, die sich um weniger als ein vorgegebenes Maß von dem zumindest einen optimierten ersten Prozessparameter bzw. von den bestimmten Werten für den zumindest einen zweiten Prozessparameter unterscheiden. Mit anderen Worten werden zur Ausführung des Produktionsverfahrens in beispielhaften Ausführungsformen Werte für den zumindest einen ersten bzw. zweiten Prozessparameter verwendet, die sich um weniger als ein vorgegebenes Maß von den (zuvor) unter Verwendung der Optimierungsfunktion und des mathematischen Modells bestimmten Werten unterscheiden.

In beispielhaften Ausführungsformen entspricht die Einhaltung der zumindest einen mit der Baustoffplatte in Zusammenhang stehenden Nebenbedingung einer Einhaltung zumindest eines vorgegebenen Qualitätskriteriums für die Baustoffplatte. Die Einhaltung eines vorgegebenen Qualitätskriteriums kann beispielsweise einem Über- oder Unterschreiten eines Qualitätsschwellwerts entsprechen. Ein Qualitätsschwellwert kann beispielsweise als zu erreichender (z.B. als zu über- oder unterschreitender) Schwellwert für einen Qualitätsparameter der Baustoffplatte verstanden werden. Beispielsweise kann ein Qualitätsschwellwert einem Mindestqualitätsschwellwert (ein Schwellwert, der eine zumindest zu erreichende Qualität der Baustoffplatte repräsentiert) entsprechen. Unter einem Qualitätsparameter einer Baustoffplatte kann beispielsweise ein Wert verstanden werden, der zumindest eine qualitative Eigenschaft der Baustoffplatte angibt. Eine solche qualitative Eigenschaft der Baustoffplatte kann beispielsweise als Qualitätseigenschaft bezeichnet werden. In beispielhaften Ausführungsformen entspricht die Einhaltung des zumindest einen vorgegebenen Qualitätskriteriums daher einem Erreichen zumindest eines Qualitätsschwellwerts durch zumindest einen Qualitätsparameter der Baustoffplatte.

Alternativ oder zusätzlich kann die zumindest eine mit der Baustoffplatte in Zusammenhang stehende Nebenbedingung beispielsweise gewünschte Abmessungen (z.B. Breite, Länge, Höhe, Volumen etc.) und/oder ein gewünschtes Aussehen (z.B. Farbe, Oberflächenstruktur etc.) der Baustoffplatte umfassen oder diese(s) repräsentieren.

In beispielhaften Ausführungsformen ist das zumindest eine vorgegebene Qualitätskriterium für die Baustoffplatte während des Produktionsverfahrens messbar und/oder vorhersagbar. Mit anderen Worten ist das zumindest eine vorgegebene Qualitätskriterium in beispielhaften Ausführungsformen online messbar und/oder vorhersagbar. Darunter, dass ein Qualitätskriterium während des Produktionsverfahrens (bzw. online) messbar und/oder vorhersagbar ist, kann beispielsweise verstanden werden, dass zumindest ein Qualitätsparameter der Baustoffplatte während des Produktionsverfahrens (bzw. online) gemessen und/oder vorhergesagt werden kann, sodass beispielsweise ein Erreichen zumindest eines Qualitätsschwellwerts durch den zumindest einen Qualitätsparameter der Baustoffplatte (z.B. ebenfalls) während des Produktionsverfahrens (bzw. online) geprüft werden kann, wie oben erläutert. Die Vorhersage von Qualitätsparametern (z.B. einer Baustoffplatte) während eines Produktionsverfahrens kann beispielsweise als Online Qualitätsvorhersage bezeichnet werden.

Die Zeitraumangabe "während des Produktionsverfahrens" umfasst in beispielhaften Ausführungsformen einen Zeitraum, in dem eine bestimmte zu produzierende Baustoffplatte produziert wird. Der genannte Zeitraum kann beispielsweise mit einem ersten Produktionsschritt des Produktionsverfahrens beginnen und/oder mit einem letzten Produktionsschritt des Produktionsverfahrens enden (vgl. hierzu die obigen beispielhaften Erläuterungen im Zusammenhang mit der Produktionsanlage).

Insbesondere die Verwendung von während des Produktionsverfahrens vorhersagbaren Qualitätskriterien ermöglicht es in vorteilhafter Weise, auch solche Qualitätskriterien bei der Bestimmung und Bereitstellung optimierter Prozessparameter zu berücksichtigen, die beispielsweise während des Produktionsverfahrens (bzw. online) nicht messbar sind. So kann in dem Produktionsverfahren beispielsweise auch die Einhaltung nicht online messbarer Qualitätseigenschaften vorteilhaft sichergestellt werden.

Das mathematische Modell umfasst in beispielhaften Ausführungsformen einen Satz von Modellkoeffizienten für eine oder mehrere mathematische Gleichungen, die dazu eingerichtet ist/sind, basierend auf einer Eingabe umfassend Werte für den zumindest einen ersten Prozessparameter und ferner umfassend zumindest einen Wert, der die zumindest eine mit der Baustoffplatte in Zusammenhang stehende Nebenbedingung repräsentiert, jeweilige Werte für den zumindest einen zweiten Prozessparameter auszugeben, wobei die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter die zumindest eine Nebenbedingung eingehalten wird.

Mit anderen Worten ist das mathematische Modell in beispielhaften Ausführungsformen dazu eingerichtet, Werte für zweite Prozessparameter auszugeben, die zu (z.B. zuvor) bestimmten Werten für erste Prozessparameter passen. Unter passenden Werten für zweite Prozessparameter können dabei beispielsweise Werte verstanden werden, die derart sind, dass bei ihrer Verwendung in dem Produktionsverfahren zusammen mit den Werten für die ersten Prozessparameter (z.B. durch Einstellen der Werte für die ersten und zweiten Prozessparameter als Sollwerte) die zumindest eine mit der Baustoffplatte in Zusammenhang stehende Nebenbedingung eingehalten wird.

Kurz gesagt kann mithilfe des mathematischen Modells also beispielsweise vorteilhaft sichergestellt werden, dass nur solche Werte für die zweiten Prozessparameter bestimmt und/oder in dem Produktionsverfahren eingestellt werden, die zusammen mit den optimierten ersten Prozessparametern zur Herstellung von Baustoffplatten führen, die die zumindest eine Nebenbedingung (z.B. voraussichtlich) erfüllen.

Somit ermöglichen die unter Verwendung des mathematischen Modells bestimmten Werte für die zweiten Prozessparameter ein Einstellen der optimierten ersten Prozessparameter in dem Produktionsverfahren, wodurch eine durch die Optimierungsfunktion repräsentierte Größe vorteilhaft optimiert werden kann, bei gleichzeitiger Einhaltung der mit der Baustoffplatte in Zusammenhang stehenden Nebenbedingung(en) (z.B. ein oder mehrere vorgegebene Qualitätskriterien).

In beispielhaften Ausführungsformen entspricht der zumindest eine zweite Prozessparameter zumindest einem von:
- zumindest einem Pressdruck;
- zumindest einer Pressdistanz;
- zumindest einer Presstemperatur;
- zumindest einer Vorpressendistanz;
- zumindest einem Vorpressendruck;
- zumindest einer Mattentemperatur; und/oder
- zumindest einer Spanfeuchte.

In beispielhaften Ausführungsformen umfasst das mathematische Modell ein statistisches Modell oder entspricht einem statistischen Modell. Insbesondere liegt in einer beispielhaften Ausführungsform dem mathematischen Modell ein sogenanntes Modell für interdependente simultane stochastische lineare Gleichungen zugrunde. Es hat sich gezeigt, dass zur Modellierung der Produktionsprozesse für Baustoffplatten beispielsweise Regressionsmodelle für interdependente Systeme simultaner (linearer) stochastischer Gleichungen geeignet sein können. Insbesondere die Prozesse in der Holzwerkstoffindustrie können als interdependent und simultan angesehen werden, da mehrere Produkteigenschaften gleichzeitig und nicht unabhängig voneinander entstehen sowie gegenseitige Abhängigkeiten der Einflussgrößen bzw. Prozessparameter untereinander bestehen. Die Modellgleichungen können als linear beschrieben werden, da die Modellkoeffizienten linear eingehen. Es versteht sich aber, dass die vorliegende Offenbarung nicht auf solche linearen Systeme beschränkt ist. Beispielsweise können Prozessparameter auch mit einem quadratischen, kubischen oder exponentiellen (oder anderen) Gewicht einfließen.

Somit umfasst das mathematische Modell in beispielhaften Ausführungsformen ein simultanes Gleichungsmodell, insbesondere ein auf dem Dreistufigen-Kleinste-Quadrate-Verfahren ("Three-stage least squares", "3SLS") basierendes mathematisches Modell. In beispielhaften Ausführungsformen umfasst das mathematische Modell weiter ein auf dem Zweistufigen-Kleinste-Quadrate-Verfahren ("Two-stage least squares", "2SLS") basierendes mathematisches Modell, ein auf dem Partial-Least-Squares (PLS) basierendes mathematisches Modell, und/oder ein lineares Regressionsmodell (Linear Regression Model).

Alternativ oder zusätzlich basiert das mathematische Modell in beispielhaften Ausführungsformen auf maschinellen Lernverfahren (ML) und/oder auf künstlicher Intelligenz (KI). Beispielsweise kann das mathematische Modell auf Reinforcement Learning, Deep Reinforcement Learning, und/oder auf zumindest einem künstlichen neuronalen Netz basieren. Es hat sich gezeigt, dass insbesondere mathematische Modelle, die auf Reinforcement Learning basieren, besonders geeignet sind, die oben erwähnten, interdependenten und/oder simultanen Prozesse in der Holzwerkstoffindustrie auf besonders genaue und/oder robuste Weise abzubilden bzw. zu modellieren.

Das Verfahren gemäß dem genannten Aspekt umfasst ferner einen Schritt des Bereitstellens des zumindest einen optimierten ersten Prozessparameters und der Werte für den zumindest einen zweiten Prozessparameter zur Verwendung in dem Produktionsverfahren. In beispielhaften Ausführungsformen umfasst das Bereitstellen von Werten für Prozessparameter ein Übertragen (z.B. Senden) der Werte, beispielsweise an zumindest eine Produktionsanlage zum Herstellen von Baustoffplatten. Alternativ oder zusätzlich umfasst das Bereitstellen der Werte in beispielhaften Ausführungsformen ein Einstellen der Werte in einem Produktionsverfahren zum Herstellen einer Baustoffplatte, beispielsweise als Sollwert. Der zumindest eine optimierte erste Prozessparameter und die Werte für den zumindest einen zweiten Prozessparameter können beispielsweise gleichzeitig oder nacheinander übertragen und/oder eingestellt werden. Alternativ oder zusätzlich umfasst das Bereitstellen in beispielhaften Ausführungsformen ein (beispielsweise zeitweises oder dauerhaftes) Abspeichern des zumindest einen optimierten ersten Prozessparameters und/oder der Werte für den zumindest einen zweiten Prozessparameter, beispielsweise zur späteren Übertragung und/oder Einstellung an einer Produktionsanlage zum Herstellen von Baustoffplatten.

Alternativ oder zusätzlich umfasst das Bereitstellen in beispielhaften Ausführungsformen ein Ausgeben des zumindest einen optimierten ersten Prozessparameters und/oder der Werte für den zumindest einen zweiten Prozessparameter. Hierbei kann ein Ausgeben der genannten Prozessparameter und/oder Werte beispielsweise ein internes Aus- oder Weitergeben dieser Parameter/Werte z.B. innerhalb der zumindest einen Steuervorrichtung umfassen, beispielsweise für eine weitere Verwendung der Parameter/Werte durch die zumindest eine Steuervorrichtung. Ein Ausgeben der genannten Parameter und/oder Werte kann weiter beispielsweise ein Ausgeben der genannten Parameter und/oder Werte zur weiteren Verarbeitung durch eine (beispielsweise von der zumindest einen Steuervorrichtung) externe Vorrichtung umfassen. Beispielsweise können die ausgegebenen Prozessparameter und/oder Werte in der Steuervorrichtung oder in einer weiteren Datenverarbeitungseinrichtung in Anzeigedaten gewandelt werden, die von einer Anzeigevorrichtung (z.B. einem Bildschirm, der mit der Steuervorrichtung verbunden ist) zur Anzeige einer Repräsentation oder Darstellung verwendet werden können.

Das Verfahren umfasst in beispielhaften Ausführungsformen also weiter:
- Veranlassen einer Anzeige einer Repräsentation des zumindest einen optimierten ersten Prozessparameters und/oder der Werte für den zumindest einen zweiten Prozessparameter an einer Anzeigevorrichtung, die mit der Produktionsanlage verbunden ist; und/oder
- Erzeugen von zumindest einem Steuersignal basierend auf dem zumindest einen optimierten ersten Prozessparameter und/oder auf den Werten für den zumindest einen zweiten Prozessparameter zum Steuern zumindest einer Komponente der Produktionsanlage

Mit anderen Worten können der zumindest eine optimierte erste Prozessparameter und/oder die Werte für den zumindest einen zweiten Prozessparameter in beispielhaften Ausführungsformen einerseits für eine Anzeige einer Repräsentation oder Darstellung der genannten Parameter/Werte verwendet werden. Hierbei kann eine Repräsentation beispielsweise eine graphische Darstellung der genannten Parameter/Werte (beispielsweise eine Echtzeitdarstellung) in Form einer Datenwert-Zeit-Kurve auf einem Bildschirm umfassen, wobei der Bildschirm als Anzeigevorrichtung direkt oder indirekt mit der Steuervorrichtung und/oder der Produktionsanlage verbunden sein kann. Eine solche Anzeige der genannten Parameter/Werte kann es einem Benutzer beispielsweise ermöglichen, eine autonome Steuerung/Regelung der Produktionsanlage (z.B. in Echtzeit) zu kontrollieren und/oder während der Produktion einer Baustoffplatte (z.B. online) darüber informiert zu sein, welche Werte für die ersten und/oder zweiten Prozessparameter von einem autonomen Steuerungs-/Regelungsverfahren als optimiert bestimmt und/oder von diesem eingestellt wurden.

Alternativ oder zusätzlich wird das in beispielhaften Ausführungsformen basierend auf dem zumindest einen optimierten ersten Prozessparameter und/oder auf den Werten für den zumindest einen zweiten Prozessparameter erzeugte zumindest eine Steuersignal verwendet, um zumindest eine Komponente der Produktionsanlage, beispielsweise unter Verwendung einer basierend auf einer Feedback-Schleife arbeitenden Steuerelektronik direkt zu steuern und/oder zu regeln.

In beispielhaften Ausführungsformen umfasst das Verfahren daher weiter:
- Steuern und/oder Regeln des Produktionsverfahrens zum Herstellen einer Baustoffplatte basierend auf dem zumindest einen optimierten ersten Prozessparameter und auf den Werten für den zumindest einen zweiten Prozessparameter.

Das Steuern des Produktionsverfahrens basierend auf dem zumindest einen optimierten ersten Prozessparameter und auf den Werten für den zumindest einen zweiten Prozessparameter umfasst in beispielhaften Ausführungsformen ein zumindest zeitweises Einstellen der optimierten ersten Prozessparameter und der Werte für den zumindest einen zweiten Prozessparameter in dem Produktionsverfahren, z.B. als Sollwerte.

Alternativ oder zusätzlich umfasst das Steuern des Produktionsverfahrens basierend auf dem zumindest einen optimierten ersten Prozessparameter und auf den Werten für den zumindest einen zweiten Prozessparameter in beispielhaften Ausführungsformen ein zumindest zeitweises Einstellen jeweiliger Werte für den zumindest einen ersten bzw. zweiten Prozessparameter, die sich um weniger als ein vorgegebenes Maß von dem zumindest einen optimierten ersten Prozessparameter bzw. von den bestimmten Werten für den zumindest einen zweiten Prozessparameter unterscheiden. Mit anderen Worten werden in beispielhaften Ausführungsformen also Werte für den zumindest einen ersten bzw. zweiten Prozessparameter eingestellt, die sich in einem relativ geringen (z.B. vorgegebenen) Maße von den optimierten Prozessparametern unterscheiden.

Das Regeln des Produktionsverfahrens basierend auf dem zumindest einen optimierten ersten Prozessparameter und auf den Werten für den zumindest einen zweiten Prozessparameter umfasst in beispielhaften Ausführungsformen ebenfalls ein zumindest zeitweises Einstellen der optimierten ersten Prozessparameter und der Werte für den zumindest einen zweiten Prozessparameter in dem Produktionsverfahren, z.B. als Sollwerte. In beispielhaften Ausführungsformen umfasst das Regeln des Produktionsverfahrens ferner ein Prüfen, ob der zumindest eine optimierte erste Prozessparameter und die Werte für den zumindest einen zweiten Prozessparameter für den zumindest einen ersten und den zumindest einen zweiten Prozessparameter des Produktionsverfahrens (z.B. tatsächlich) eingestellt und/oder messbar sind, z.B. als Istwerte. In einem Fall, in dem diese Prüfung nicht erfolgreich ist (beispielsweise in einem Fall, in dem die Istwerte von den Sollwerten abweichen), umfasst das Regeln des Produktionsverfahrens in beispielhaften Ausführungsformen ferner ein zumindest zeitweises Einstellen jeweiliger angepasster Werte für den zumindest einen ersten und/oder den zumindest einen zweiten Prozessparameter des Produktionsverfahrens (z.B. als Sollwerte). Die angepassten Werte können beispielsweise derart sein, dass in Folge des zumindest zeitweisen Einstellens der angepassten Werte für den zumindest einen ersten und/oder den zumindest einen zweiten Prozessparameter des Produktionsverfahrens (z.B. als Sollwerte) der zumindest eine optimierte erste Prozessparameter und die Werte für den zumindest einen zweiten Prozessparameter (z.B. tatsächlich) eingestellt und/oder messbar sind, z.B. als Istwerte. Mit anderen Worten umfasst das Regeln des Produktionsverfahrens in beispielhaften Ausführungsformen ein zumindest zeitweises Steuern des zumindest einen ersten Prozessparameters und des zumindest einen zweiten Prozessparameters derart, dass der zumindest eine optimierte erste Prozessparameter und die (zuvor bestimmten) Werte für den zumindest einen zweiten Prozessparameter in dem Produktionsverfahren (tatsächlich) für den zumindest einen ersten und den zumindest einen zweiten Prozessparameter eingestellt sind, z.B. als Istwerte. Das vorstehend beschriebene Vorgehen kann beispielsweise als geschlossener Regelkreis bezeichnet werden. Es versteht sich also, dass unter einem Regeln eines Produktionsverfahrens ein Steuern des Produktionsverfahrens auf eine bestimmte Art verstanden werden kann. In beispielhaften Ausführungsformen umfasst das Regeln des Produktionsverfahrens daher ein Steuern des Produktionsverfahrens.

Alternativ oder zusätzlich umfasst das Regeln des Produktionsverfahrens basierend auf dem zumindest einen optimierten ersten Prozessparameter und auf den Werten für den zumindest einen zweiten Prozessparameter in beispielhaften Ausführungsformen ein zumindest zeitweises Steuern und/oder Regeln des zumindest einen ersten Prozessparameters und des zumindest einen zweiten Prozessparameters derart, dass für den zumindest einen ersten und den zumindest einen zweiten Prozessparameter (z.B. tatsächlich) eingestellte und/oder messbare Werte (z.B. Istwerte) sich um weniger als ein vorgegebenes Maß von den optimierten ersten Prozessparametern bzw. von den Werten für die zweiten Prozessparameter unterscheiden.

Das Steuern und/oder Regeln des Produktionsverfahrens basierend auf den genannten Parametern/Werten (z.B. unter Verwendung der genannten Parameter/Werte) kann beispielsweise mithilfe zumindest eines Steuer- und/oder Regelsignals erfolgen, welches (z.B. zuvor) basierend auf dem zumindest einen optimierten ersten Prozessparameter und/oder auf den Werten für den zumindest einen zweiten Prozessparameter erzeugt wird, z.B. wie vorstehend erläutert.

Insbesondere das Steuern und/oder Regeln eines Produktionsverfahrens basierend auf dem zumindest einen optimierten ersten Prozessparameter und auf den Werten für den zumindest einen zweiten Prozessparameter ermöglicht es in vorteilhafter Weise, eine Produktionsanlage zum Herstellen von Baustoffplatten so zu betreiben, dass ein vorbestimmtes Optimierungsziel erreicht (z.B. Kosten minimiert) und gleichzeitig eine mit der Baustoffplatte in Zusammenhang stehende Nebenbedingung (z.B. eine vorgegebene Qualität) eingehalten werden können.

Das Bereitstellen des zumindest einen optimierten ersten Prozessparameters und der Werte für den zumindest einen zweiten Prozessparameter erfolgt also zur Verwendung der genannten Parameter/Werte in dem Produktionsverfahren zum Herstellen von Baustoffplatten.

Das Bestimmen und Bereitstellen des zumindest einen optimierten ersten Prozessparameters und der Werte für den zumindest einen zweiten Prozessparameter mittels des Verfahrens gemäß dem ersten Aspekt ermöglichen es vorteilhaft, ein Produktionsverfahren zum Herstellen von Baustoffplatten so zu steuern/zu regeln (beispielsweise durch Einstellen der genannten Werte für die Prozessparameter als Sollwerte), dass einerseits eine zu optimierende Zielfunktion (die Optimierungsfunktion) in einer gewünschten Weise optimiert (z.B. minimiert oder maximiert) wird, und dass andererseits zumindest eine mit der Baustoffplatte in Zusammenhang stehende Nebenbedingung (z.B. ein vorgegebenes Qualitätskriterium) eingehalten wird.

Beispielsweise kann das Verfahren gemäß dem genannten Aspekt ein Bestimmen und Bereitstellen von Werten für (anlagen-)technische Prozessparameter ermöglichen, durch die eine Produktionsanlage zum Herstellen von Baustoffplatten so gesteuert/geregelt werden kann, dass, z.B., bei minimalen Kosten (in einem Fall, in dem die Optimierungsfunktion eine Kostenfunktion ist) und/oder minimalen Emissionen (in einem Fall, in dem die Optimierungsfunktion eine Emissionsfunktion ist) beispielsweise eine vorgegebene Qualität von mit dem Produktionsverfahren hergestellten Baustoffplatten erreicht wird.

Kurz gesagt ermöglicht es das Verfahren gemäß dem genannten Aspekt also, bezüglich der eingangs genannten Anforderungen bestmögliche Werte für (anlagen-)technische Prozessparameter eines Produktionsverfahrens zum Herstellen von Baustoffplatten zu bestimmen, insbesondere um eine entsprechende Produktionsanlage damit in vorteilhafter Weise zu steuern und/oder zu regeln. Die Bestimmung geeigneter Werte für die ersten und zweiten Prozessparameter mithilfe des Verfahrens gemäß dem genannten Aspekt ist ferner effizienter als eine (ausschließlich) manuelle Bestimmung dieser Werte.

Das Verfahren gemäß dem genannten Aspekt kann ferner einen manuellen Steuerungs-/Regelungsaufwand verringern, beispielsweise wenn die bereitgestellten Parameter/Werte zu einer zumindest teilweise autonomen Steuerung/Regelung des Produktionsverfahrens verwendet werden. So erfolgt das Steuern und/oder Regeln des Produktionsverfahrens in beispielhaften Ausführungsformen autonom und/oder automatisiert. Unter einem autonomen bzw. automatisierten Steuern und/oder Regeln des Produktionsverfahrens kann beispielsweise verstanden werden, dass der zumindest eine optimierte erste Prozessparameter und die Werte für den zumindest einen zweiten Prozessparameter in dem Produktionsverfahren autonom und/oder automatisiert, z.B. als Sollwerte, eingestellt werden, z.B. von zumindest einer Steuervorrichtung. Unter einem autonomen und/oder automatisierten Einstellen von Werten kann dabei beispielsweise verstanden werden, dass das Einstellen selbsttätig erfolgt, beispielsweise ohne, dass ein menschlicher Anwender das Einstellen veranlasst. Diese Art der Steuerung/Regelung des Produktionsverfahrens kann beispielsweise als übergeordneter geschlossener Regelkreis bezeichnet werden. In beispielhaften Ausführungsformen ist das Verfahren gemäß dem genannten Aspekt ein Verfahren zur zumindest teilweise autonomen Steuerung und/oder Regelung eines Produktionsverfahrens zum Herstellen einer Baustoffplatte. Eine solche autonome und/oder automatisierte Steuerung/Regelung des Produktionsverfahrens ermöglicht es vorteilhaft, einen manuellen Steuerungs-/Regelungsaufwand zu verringern.

In beispielhaften Ausführungsformen werden mithilfe des Verfahrens gemäß dem genannten Aspekt kontinuierlich Werte für den zumindest einen ersten Prozessparameter und/oder für den zumindest einen zweiten Prozessparameter bestimmt und/oder bereitgestellt (z.B. in Echtzeit). Darunter, dass die genannten Werte kontinuierlich bestimmt und/oder bereitgestellt werden, kann beispielsweise verstanden werden, dass die genannten Werte wiederholt bestimmt und/oder bereitgestellt werden, insbesondere mit einer Häufigkeit oder Frequenz, die größer oder gleich einer vorgegebenen Häufigkeit oder Frequenz ist. Eine solche kontinuierliche Bestimmung/Bereitstellung kann beispielsweise als ein dynamischer Vorgang im Sinne eines Echtzeit (Realtime) Regelkreises bezeichnet werden.

In beispielhaften Ausführungsformen ist die Optimierungsfunktion von dem zumindest einen ersten Prozessparameter abhängig und/oder ist die Optimierungsfunktion von dem zumindest einen zweiten Prozessparameter unabhängig. Mit anderen Worten ist die Optimierungsfunktion in beispielhaften Ausführungsformen eine Funktion des zumindest einen ersten Prozessparameters und/oder keine Funktion des zumindest einen zweiten Prozessparameters. Darunter, dass die Optimierungsfunktion eine/keine Funktion eines Prozessparameters ist, kann beispielsweise verstanden werden, dass ein (Funktions-)Wert der Optimierungsfunktion sich ändert/nicht ändert, wenn sich ein Wert des Prozessparameters ändert. In beispielhaften Ausführungsformen ist der zumindest eine erste Prozessparameter also eine Variable der Optimierungsfunktion und/oder ist der zumindest eine zweite Prozessparameter keine Variable der Optimierungsfunktion. Während der zumindest eine erste Prozessparameter also beispielsweise als zumindest eine Variable der Optimierungsfunktion verstanden werden kann, kann der zumindest eine optimierte erste Prozessparameter als jeweiliger (bestimmter) Wert dieser zumindest einen Variablen verstanden werden (z.B. als ein Wert, der die Optimierungsfunktion optimiert). Insbesondere diese Aufteilung von Prozessparametern in erste und zweite Prozessparameter ermöglicht es in vorteilhafter Weise, die Optimierungsfunktion in Abhängigkeit des zumindest einen ersten Prozessparameters in einer gewünschten Weise zu optimieren und ferner Werte für den zumindest einen zweiten Prozessparameter derart zu wählen, dass zugleich die zumindest eine mit der Baustoffplatte in Zusammenhang stehende Nebenbedingung eingehalten wird.

In beispielhaften Ausführungsformen umfasst das Verfahren weiter:
- Prüfen, ob der zumindest eine optimierte erste Prozessparameter und die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter zumindest eine Einschränkung einer Steuerung und/oder einer Regelung des Produktionsverfahrens berücksichtigt wird; und
   ∘ in einem Fall, in dem die Prüfung erfolgreich ist, Bereitstellen des zumindest einen optimierten ersten Prozessparameters und der Werte für den zumindest einen zweiten Prozessparameter zur Verwendung in dem Produktionsverfahren;
   ∘ in einem Fall, in dem die Prüfung nicht erfolgreich ist, Verwerfen der Werte für den zumindest einen zweiten Prozessparameter und/oder Bestimmen weiterer Werte für den zumindest einen zweiten Prozessparameter.

Darunter, dass die Prüfung erfolgreich ist, kann beispielsweise verstanden werden, dass festgestellt wird, dass der zumindest eine optimierte erste Prozessparameter und die Werte für den zumindest einen zweiten Prozessparameter derart sind, dass bei einer Ausführung des Produktionsverfahrens basierend auf den genannten Parametern/Werten (z.B. unter deren Verwendung) die zumindest eine Einschränkung einer Steuerung und/oder einer Regelung des Produktionsverfahrens berücksichtigt wird.

Somit umfasst das Verfahren in beispielhaften Ausführungsformen:
- Feststellen, dass der zumindest eine optimierte erste Prozessparameter und die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter zumindest eine Einschränkung einer Steuerung und/oder einer Regelung des Produktionsverfahrens berücksichtigt wird; und
- Bereitstellen des zumindest einen optimierten ersten Prozessparameters und der Werte für den zumindest einen zweiten Prozessparameter zur Verwendung in dem Produktionsverfahren.

Darunter, dass die Prüfung nicht erfolgreich ist, kann beispielsweise verstanden werden, dass festgestellt wird, dass der zumindest eine optimierte erste Prozessparameter und die Werte für den zumindest einen zweiten Prozessparameter derart sind, dass bei einer Ausführung des Produktionsverfahrens basierend auf den genannten Parametern/Werten (z.B. unter Verwendung der genannten Parameter/Werte) die zumindest eine Einschränkung einer Steuerung und/oder einer Regelung des Produktionsverfahrens nicht berücksichtigt wird.

Somit umfasst das Verfahren in beispielhaften Ausführungsformen:
- Feststellen, dass der zumindest eine optimierte erste Prozessparameter und die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter zumindest eine Einschränkung einer Steuerung und/oder einer Regelung des Produktionsverfahrens nicht berücksichtigt wird; und
- Verwerfen der Werte für den zumindest einen zweiten Prozessparameter und/oder Bestimmen weiterer Werte für den zumindest einen zweiten Prozessparameter.

Das Verwerfen der Werte für den zumindest einen zweiten Prozessparameter umfasst in beispielhaften Ausführungsformen ein Löschen der Werte, z.B. von einem computerlesbaren Speichermedium. Ferner kann unter dem Verwerfen der Werte für den zumindest einen zweiten Prozessparameter beispielsweise verstanden werden, dass die Werte für den zumindest einen zweiten Prozessparameter in dem Produktionsverfahren nicht verwendet werden, beispielsweise zur Steuerung und/oder Regelung des Produktionsverfahrens. Das Bestimmen weiterer Werte für den zumindest einen zweiten Prozessparameter umfasst in beispielhaften Ausführungsformen ein Bestimmen, unter Verwendung des mathematischen Modells, eines weiteren (z.B. zweiten, dritten, vierten etc.) Satzes von Werten für den zumindest einen zweiten Prozessparameter. In beispielhaften Ausführungsformen wird das Bestimmen des weiteren Satzes von Werten für den zumindest einen zweiten Prozessparameter so oft wiederholt, bis ein Satz von Werten für den zumindest einen zweiten Prozessparameter gefunden wird, bei dessen Verwendung zusammen mit dem zumindest einen optimierten ersten Prozessparameter die zumindest eine mit dem Produktionsverfahren in Zusammenhang stehende Nebenbedingung eingehalten wird.

In beispielhaften Ausführungsformen ist die zumindest eine Einschränkung der Steuerung und/oder der Regelung des Produktionsverfahrens durch eine Produktionsanlage zur Ausführung des Produktionsverfahrens bedingt und/oder durch einen Anwender des Produktionsverfahrens vorgegeben. Mit anderen Worten stellt die zumindest eine Einschränkung der Steuerung und/oder der Regelung des Produktionsverfahrens in beispielhaften Ausführungsformen eine (maschinen- und/oder anlagen-)technische Einschränkung der Steuerung/Regelung des Produktionsverfahrens und/oder eine durch einen Anwender des Produktionsverfahrens vorgegebene Einschränkung der Steuerung/Regelung dar. Unter einer Einschränkung kann beispielsweise eine Limitierung verstanden werden (z.B. hinsichtlich möglicher Eingriffe und/oder Regelziele). Unter einem Anwender kann beispielsweise ein Operator des Produktionsverfahrens und/oder der Produktionsanlage verstanden werden.

In beispielhaften Ausführungsformen umfasst die zumindest eine Einschränkung der Steuerung und/oder der Regelung des Produktionsverfahrens zumindest einen vorgegebenen Schwellwert für den zumindest einen ersten und/oder für den zumindest einen zweiten Prozessparameter des Produktionsverfahrens. Die Prüfung, ob der zumindest eine optimierte erste Prozessparameter und die Werte für den zumindest einen zweiten Prozessparameter derart sind, dass die zumindest eine Einschränkung der Steuerung und/oder der Regelung des Produktionsverfahrens berücksichtigt wird, kann in den genannten beispielhaften Ausführungsformen beispielsweise ein Prüfen umfassen, ob der zumindest eine optimierte erste Prozessparameter und die Werte für den zumindest einen zweiten Prozessparameter den zumindest einen Schwellwert überschreiten (bei einem unteren Schwellwert) bzw. unterschreiten (bei einem oberen Schwellwert).

Alternativ oder zusätzlich umfasst die zumindest eine Einschränkung der Steuerung und/oder der Regelung des Produktionsverfahrens in beispielhaften Ausführungsformen zumindest einen vorgegebenen Wertebereich für den zumindest einen ersten und/oder für den zumindest einen zweiten Prozessparameter. Die Prüfung, ob der zumindest eine optimierte erste Prozessparameter und die Werte für den zumindest einen zweiten Prozessparameter derart sind, dass die zumindest eine Einschränkung der Steuerung und/oder der Regelung des Produktionsverfahrens berücksichtigt wird, kann in den genannten beispielhaften Ausführungsformen beispielsweise ein Prüfen umfassen, ob der zumindest eine optimierte erste Prozessparameter und die Werte für den zumindest einen zweiten Prozessparameter innerhalb oder außerhalb des zumindest einen Wertebereichs liegen.

Ferner alternativ oder zusätzlich entspricht die zumindest eine Einschränkung der Steuerung und/oder der Regelung des Produktionsverfahrens in beispielhaften Ausführungsformen einem vorgegebenen einzuhaltenden Zustand zumindest eines Teils der Produktionsanlage zur Herstellung von Baustoffplatten. Die Prüfung, ob der zumindest eine optimierte erste Prozessparameter und die Werte für den zumindest einen zweiten Prozessparameter derart sind, dass die zumindest eine Einschränkung der Steuerung und/oder der Regelung des Produktionsverfahrens berücksichtigt wird, kann in den genannten beispielhaften Ausführungsformen beispielsweise ein Prüfen umfassen, ob der vorgegebene einzuhaltende Zustand des zumindest einen Teils der Produktionsanlage eingehalten wird, wenn der zumindest eine optimierte erste Prozessparameter und die Werte für den zumindest einen zweiten Prozessparameter in dem Produktionsverfahren verwendet (z.B. als Sollwerte eingestellt) werden.

Durch das Berücksichtigen (maschinen-)technischer und/oder anwenderbezogener Einschränkungen der Steuerung/Regelung des Produktionsverfahrens kann in vorteilhafter Weise sowohl ein störungsärmerer Betrieb einer entsprechenden Produktionsanlage als auch ein Betrieb in einer vom Anwender gewünschten Weise gewährleistet werden.

In beispielhaften Ausführungsformen umfasst das Verfahren weiter:
- Erhalten von Informationen zu zumindest einer Umgebungsbedingung, unter der das Produktionsverfahren ausgeführt wird, und/oder
- Erhalten jeweiliger Werte für zumindest einen früheren Prozessparameter des Produktionsverfahrens;
- wobei das Bestimmen der Werte für den zumindest einen zweiten Prozessparameter auf den Informationen zu der zumindest einen Umgebungsbedingung und/oder auf den Werten für den zumindest einen früheren Prozessparameter basiert.

Die zumindest eine Umgebungsbedingung, unter der das Produktionsverfahren ausgeführt wird, umfasst in beispielhaften Ausführungsformen mindestens eines von:
- einer Temperatur, bei der das Produktionsverfahren ausgeführt wird;
- einer Luftfeuchtigkeit, bei der das Produktionsverfahren ausgeführt wird;
- einem Luftdruck, bei dem das Produktionsverfahren ausgeführt wird.

Die zumindest eine Umgebungsbedingung kann beispielsweise einen Einfluss auf das Produktionsverfahren haben (z.B. kann eine Umgebungstemperatur einen Einfluss auf eine Temperatur in einer Einheit oder in einem Abschnitt der Produktionsanlage haben). Folglich können auch die von dem mathematischen Modell abgebildeten Zusammenhänge (z.B. zwischen Prozessparametern des Produktionsverfahrens und Qualitätsparametern der Baustoffplatte) beispielsweise von der zumindest einen Umgebungsbedingung abhängen und/oder von dieser beeinflusst werden (z.B. kann es nötig sein, eine Vorlauftemperatur eines Thermoöls zu erhöhen, wenn eine Umgebungstemperatur vergleichsweise niedrig ist). In ähnlicher Weise kann der zumindest eine frühere Prozessparameter beispielsweise einen Einfluss auf derzeit in Herstellung befindliche Baustoffplatten haben (z.B. kann ein früherer, in einem ersten Herstellungsschritt eingestellter Prozessparameter einen Einfluss auf Eigenschaften einer Baustoffplatte haben, die den ersten Herstellungsschritt durchlaufen hat, als dort der frühere Prozessparameter eingestellt war). Der zumindest eine frühere Prozessparameter umfasst in beispielhaften Ausführungsformen zumindest einen früheren Wert des zumindest einen ersten Prozessparameters und/oder zumindest einen früheren Wert des zumindest einen zweiten Prozessparameters. Es versteht sich, dass sich das "früher" dabei insbesondere auf den Zeitpunkt eines Ausführens, Steuerns und/oder Regelns des Verfahrens gemäß dem genannten Aspekt beziehen. Unter einem früheren Prozessparameter kann also beispielsweise ein Wert des Prozessparameters verstanden werden, der zu einem Zeitpunkt eingestellt war bzw. gemessen wurde, der vor einem Zeitpunkt eines Ausführens, Steuerns und/oder Regelns des Verfahrens gemäß dem genannten Aspekt liegt.

Dadurch, dass das Bestimmen der Werte für den zumindest einen zweiten Prozessparameter in beispielhaften Ausführungsformen auf den Informationen zu der zumindest einen Umgebungsbedingung und/oder auf den Werten für den zumindest einen früheren Prozessparameter basiert, wird vorteilhaft ein Einfluss von Umgebungsbedingungen und/oder früheren Prozessparametern auf das Produktionsverfahren berücksichtigt, wodurch eine Genauigkeit und Robustheit der Bestimmung der Werte für den zumindest einen zweiten Prozessparameter noch weiter verbessert werden.

Alternativ oder zusätzlich basiert in beispielhaften Ausführungsformen auch das Bestimmen des zumindest einen optimierten ersten Prozessparameters unter Verwendung der Optimierungsfunktion auf den Informationen zu der zumindest einen Umgebungsbedingung und/oder auf den Werten für den zumindest einen früheren Prozessparameter. Auf diese Weise kann ein Einfluss von Umgebungsbedingungen und/oder früheren Prozessparametern darauf, welche Werte für die ersten Prozessparameter zum jeweiligen Zeitpunkt bestmöglich/optimal sind, vorteilhaft berücksichtigt werden, wodurch insbesondere die Genauigkeit der Bestimmung der optimierten ersten Prozessparameter noch weiter verbessert werden kann.

In beispielhaften Ausführungsformen umfasst das Erhalten von Informationen zu dem zumindest einen Produktionsfaktor zumindest eines von:
- Empfangen der Informationen von zumindest einer externen Vorrichtung; und/oder
- Auslesen der Informationen aus zumindest einem internen oder externen computerlesbaren Speichermedium.

In beispielhaften Ausführungsformen ist eine (Steuer-)vorrichtung, die das Verfahren gemäß dem genannten Aspekt ausführt, zu diesem Zweck über eine drahtgebundene und/oder drahtlose Kommunikationsverbindung (z.B. eine Datenschnittstelle) mit der externen Vorrichtung und/oder dem externen Speichermedium verbunden. Die externe Vorrichtung und/oder das externe Speichermedium können beispielsweise von einem externen System umfasst oder von diesem umfasst sein. In beispielhaften Ausführungsformen hält das externe System die Informationen zu dem zumindest einen Produktionsfaktor vor und/oder stellt diese der (Steuer-)vorrichtung bereit. Das externe System kann beispielsweise ein kaufmännisches System sein, das die Informationen zu dem zumindest einen Produktionsfaktor (z.B. Informationen zu Kosten zumindest eines verwendeten Materials, Informationen zu Energiekosten und/oder Informationen zu erwarteten Verkaufserlösen für die Baustoffplatte) bereit- oder vorhält. Das kaufmännische System kann beispielsweise einem Enterprise-Resource-Planning (ERP) System entsprechen oder ein solches umfassen.

In beispielhaften Ausführungsformen erfolgt das Empfangen und/oder Auslesen der Informationen zu dem zumindest einen Produktionsfaktor automatisiert/automatisch, beispielsweise also ohne, dass ein menschlicher Anwender des Produktionsverfahrens das Empfangen und/oder Auslesen (z.B. unmittelbar) veranlasst. In beispielhaften Ausführungsformen wird das Empfangen und/oder Auslesen der genannten Informationen stattdessen durch zumindest ein Signal, z.B. ein Aktualisierungssignal, veranlasst, welches beispielsweise von der zumindest einen externen Vorrichtung oder dem externen System an die (Steuer-)vorrichtung gesendet wird. Unter einem Aktualisierungssignal kann dabei beispielsweise ein Signal verstanden werden, welches anzeigt, dass zumindest ein Teil der Informationen zu dem zumindest einen Produktionsfaktor sich innerhalb eines vorgegebenen Zeitintervalls verändert hat (z.B. aktualisiert wurde).

In beispielhaften Ausführungsformen umfasst das Erhalten von Informationen zu dem zumindest einen Produktionsfaktor daher:
- Empfangen, von zumindest einer externen Vorrichtung, eines Aktualisierungssignals, welches anzeigt, dass zumindest ein Teil der Informationen zu dem zumindest einen Produktionsfaktor sich innerhalb eines vorgegebenen Zeitintervalls verändert hat; und
- Empfangen der Informationen von der zumindest einen externen Vorrichtung und/oder Auslesen der Informationen aus zumindest einem von der zumindest einen externen Vorrichtung umfassten computerlesbaren Speichermedium.

In beispielhaften Ausführungsformen ist das interne Speichermedium Teil einer (Steuer-)vorrichtung, die das Verfahren gemäß dem genannten Aspekt ausführt. In beispielhaften Ausführungsformen sind die Informationen zu dem zumindest einen Produktionsfaktor in dem internen Speichermedium gespeichert und/oder werden von diesem vorgehalten. Folglich kann die (Steuer-)vorrichtung in beispielhaften Ausführungsformen auf die in dem internen Speichermedium gespeicherten Informationen zugreifen, sie beispielsweise aus dem internen Speichermedium auslesen.

Dadurch, dass die Informationen zu dem zumindest einen Produktionsfaktor auf verschiedenen Wegen erhalten werden können, kann in vorteilhafter Weise sichergestellt werden, dass die Informationen zu dem zumindest einen Produktionsfaktor möglichst vollständig und/oder aktuell sind. Auf diese Weise kann sichergestellt werden, dass zu einem Zeitpunkt, zu dem die optimierten ersten Prozessparameter bestimmt werden, die optimierten ersten Prozessparameter die Optimierungsfunktion angesichts der Informationen zu dem zumindest einen Produktionsfaktor, basierend auf denen das Bestimmen der optimierten ersten Prozessparameter erfolgt, (tatsächlich) optimieren.

In beispielhaften Ausführungsformen umfasst das Verfahren weiter ein Erhalten des mathematischen Modells, wobei das Erhalten des mathematischen Modells Folgendes umfasst:
- Erhalten zumindest eines Trainingsdatensatzes umfassend Trainingseingabedaten und Trainingsausgabedaten; und
- Erzeugen des mathematischen Modells basierend auf dem zumindest einen Trainingsdatensatz.

In beispielhaften Ausführungsformen umfasst das Erhalten des zumindest einen Trainingsdatensatzes ein Empfangen, Abrufen und/oder Auslesen des zumindest einen Trainingsdatensatzes, beispielsweise von einer externen Vorrichtung oder aus einem computerlesbaren Speichermedium. Unter einem Trainingsdatensatz kann beispielsweise ein Datensatz verstanden werden, der zum Trainieren eines mathematischen Modells geeignet und/oder vorgesehen ist.

Unter Trainingseingabedaten können beispielsweise Daten verstanden werden, die während eines Trainierens eines mathematischen Modells (z.B. in Form eines überwachten Lernens) als vorgegebene Eingabedaten verwendet werden. In beispielhaften Ausführungsformen umfassen die Trainingseingabedaten Werte für den zumindest einen ersten Prozessparameter und Werte, die zumindest eine mit der Baustoffplatte in Zusammenhang stehende Nebenbedingung repräsentieren.

Unter Trainingsausgabedaten können beispielsweise Daten verstanden werden, die während eines Trainierens eines mathematischen Modells (z.B. in Form eines überwachten Lernens) als vorgegebene Ausgabedaten verwendet werden. Die Trainingsausgabedaten umfassen in beispielhaften Ausführungsformen Werte für den zumindest einen zweiten Prozessparameter, wobei die Werte für den zumindest einen zweiten Prozessparameter derart sind, dass bei einer Ausführung des Produktionsverfahrens basierend auf den Werten für den zumindest einen zweiten Prozessparameter und auf den von den Trainingseingabedaten umfassten Werten für den zumindest einen ersten Prozessparameter die zumindest eine mit der Baustoffplatte in Zusammenhang stehende Nebenbedingung eingehalten wird.

Für Produktionsverfahren zum Herstellen von Baustoffplatten kann der zumindest eine Trainingsdatensatz beispielsweise erhalten werden, indem in regelmäßigen Zeitabschnitten durch das Produktionsverfahren produzierte Baustoffplatten oder Teile davon nach dem Produktionsverfahren ausgeschleust und eine oder mehrere Eigenschaften (z.B. ein Qualitätsmerkmal) der ausgeschleusten Baustoffplatten vermessen werden, beispielsweise in einem Labor oder durch einen Testroboter. Die vermessenen Eigenschaften können dann beispielsweise verwendet werden, um zu prüfen, ob eine oder mehrere mit der Baustoffplatte in Zusammenhang stehende Nebenbedingungen (z.B. ein Qualitätskriterium) eingehalten werden oder nicht.

Auf diese Weise kann der zumindest eine Trainingsdatensatz für eine Baustoffplattenprobe (ganze Platte oder Teile davon) tatsächliche Werte (z.B. Messwerte, die für eine entsprechende Baustoffplattenprobe in einem Labor gemessen wurden) für zumindest eine Eigenschaft (z.B. ein Qualitätsmerkmal) einer Baustoffplattenprobe umfassen. Ferner kann der zumindest eine Trainingsdatensatz Werte für Prozessparameter eines Produktionsverfahrens zum Herstellen der Baustoffplattenprobe umfassen (z.B. Soll- oder Istwerte, beispielsweise erhalten durch einen entsprechenden Sensor, eine entsprechende Messeinrichtung, und/oder durch eine entsprechende Einstelleinrichtung der Produktionsanlage), die bei der Herstellung der Baustoffplattenprobe eingestellt wurden. Hierbei sind die Werte für die Prozessparameter in beispielhaften Ausführungsformen zeitlich zugeordnete Prozessparameterwerte, die einen entsprechenden Zeitstempel umfassen. Der Zeitstempel entspricht dem Zeitpunkt, für den ein Prozessparameterwert eine Prozessbedingung charakterisiert, die während der Produktion einer produzierten Baustoffplatte vorlag.

Der eine oder die mehreren Modellparameter des mathematischen Modells werden in beispielhaften Ausführungsformen dann so angepasst, dass das mathematische Modell lernt, basierend auf Werten für die ersten Prozessparameter (erste Eingabedaten) und Werten, die zumindest eine mit der Baustoffplatte in Zusammenhang stehende Nebenbedingung repräsentieren (zweite Eingabedaten), Werte für zweite Prozessparameter (Ausgabedaten) auszugeben die derart sind, dass bei einer Ausführung des Produktionsverfahrens basierend auf den Werten für die ersten und zweiten Prozessparameter (z.B. unter Verwendung der genannten Werte) die zumindest eine mit der Baustoffplatte in Zusammenhang stehende Nebenbedingung eingehalten wird.

Unter dem Erzeugen des mathematischen Modells basierend auf dem zumindest einen Trainingsdatensatz kann dementsprechend beispielsweise ein Trainieren des mathematischen Modells basierend auf dem zumindest einen Trainingsdatensatz verstanden werden. Dadurch, dass der zumindest eine Trainingsdatensatz wie vorstehend erläutert beispielsweise tatsächliche Werte sowohl für Prozessparameter als auch für resultierende Eigenschaften (z.B. Qualitätsmerkmale) einer Baustoffplattenprobe umfasst, ermöglicht der zumindest eine Trainingsdatensatz in vorteilhafter Weise das Trainieren des mathematischen Modells. Dies kann sukzessive für immer weitere Trainingsdatensätze erfolgen (beispielsweise immer, wenn neue Trainingsdatensätze während des Produktionsverlaufs erhalten werden), so dass das mathematische Modell mit weiteren Trainingsdatensätzen lernt und so trainiert werden kann, wodurch sich vorteilhaft eine verbesserte Genauigkeit des mathematischen Modells ergibt.

In alternativen beispielhaften Ausführungsformen umfasst das Erhalten des mathematischen Modells ein Empfangen, Abrufen und/oder Auslesen von Informationen, die das mathematische Modell repräsentieren, beispielsweise von einer externen Vorrichtung oder aus einem computerlesbaren Speichermedium. Informationen, die ein mathematisches Modell repräsentieren, können dabei beispielsweise Werte umfassen, die einige oder alle Modellparameter des mathematischen Modells repräsentieren. Mit anderen Worten umfasst das Erhalten des mathematischen Modells in alternativen beispielhaften Ausführungsformen ein Erhalten eines bereits trainierten mathematischen Modells.

Das Erhalten des mathematischen Modells in zumindest einer der vorgenannten Weisen ermöglicht es vorteilhaft, unter Verwendung des mathematischen Modells zu den optimierten ersten Prozessparameter passende Werte (wie oben erläutert) für zweite Prozessparameter zu bestimmen. Auf diese Weise können in vorteilhafter Weise bestmögliche (anlagen-)technische Prozessparameter eines Produktionsverfahrens zum Herstellen von Baustoffplatten bestimmt werden.

Ferner ermöglicht es das Erhalten des mathematischen Modells in zumindest einer der vorgenannten Weisen insbesondere, dass der zumindest eine zweite Prozessparameter z.B. von einer Steuervorrichtung, die das Verfahren gemäß dem genannten Aspekt ausführt, selbst (z.B. lokal) bestimmt werden kann. Dadurch entfällt ein andernfalls erforderliches Übermitteln des zumindest einen zweiten Prozessparameters, z.B. von einer externen Vorrichtung, an die Steuervorrichtung, z.B. über eine Datenschnittstelle. Hierdurch kann vorteilhaft eine Netzwerknutzung reduziert werden.

In beispielhaften Ausführungsformen umfassen die Trainingseingabedaten ferner Werte, die zumindest eine Umgebungsbedingung repräsentieren, unter der das Produktionsverfahren ausgeführt wird, und/oder Werte für zumindest einen früheren Prozessparameter des Produktionsverfahrens. Somit wird das mathematische Modell in beispielhaften Ausführungsformen basierend auf den genannten Werten trainiert. Auf diese Weise wird ein Einfluss von Umgebungsbedingungen und/oder früheren Prozessparametern auf das Produktionsverfahren in den Parametern oder Koeffizienten des mathematischen Modells berücksichtigt, wodurch eine Genauigkeit und Robustheit des mathematischen Modells vorteilhaft noch weiter verbessert werden.

In beispielhaften Ausführungsformen umfasst das Erzeugen des mathematischen Modells basierend auf dem zumindest einen Trainingsdatensatz ein Bestimmen zumindest eines Modellparameters des mathematischen Modells, derart, dass das mathematische Modell bei Verwendung der Trainingseingabedaten als Eingabedaten Ausgabedaten ausgibt, die sich um weniger als ein vorgegebenes Maß von den Trainingsausgabedaten unterscheiden.

Ob sich die Ausgabedaten von den Trainingsausgabedaten um weniger als ein vorgegebenes Maß unterscheiden, kann dabei beispielsweise anhand einer Abstandsfunktion und/oder einer Abstandsmetrik bestimmt werden. Somit umfasst das Bestimmen des zumindest einen Modellparameters des mathematischen Modells in beispielhaften Ausführungsformen ein Feststellen, dass ein Wert einer Abstandsfunktion und/oder Abstandsmetrik, die einen Unterschied zwischen den Trainingsausgabedaten und Ausgabedaten, die unter Verwendung des zumindest einen Modellparameters bestimmt werden, kleiner oder gleich einem Abstandsschwellwert ist.

Mit anderen Worten werden ein oder mehrere Modellparameter des mathematischen Modells in beispielhaften Ausführungsformen basierend auf dem zumindest einen Trainingsdatensatz so angepasst, dass das mathematische Modell lernt, basierend auf Eingabedaten, die im Wesentlichen den Trainingseingabedaten entsprechen, Ausgabedaten auszugeben, die im Wesentlichen den Trainingsausgabedaten entsprechen. Unter "im Wesentlichen entsprechen" kann dabei beispielsweise eine Abweichung um weniger als ein vorbestimmtes Maß (z.B. um weniger als 20% oder 10%) verstanden werden. Ob eine Abweichung geringer ist als ein vorgegebenes Maß, kann beispielsweise anhand einer Abstandsfunktion und/oder Abstandsmetrik bestimmt werden.

Das Bestimmen des zumindest einen Modellparameters basierend auf dem zumindest einen Trainingsdatensatz (z.B. in Form eines Trainierens des mathematischen Modells basierend auf dem Trainingsdatensatz) ermöglicht es vorteilhaft, komplexe nicht-lineare Zusammenhänge zwischen Größen abzubilden, die von in dem Trainingsdatensatz enthaltenen Werten repräsentiert werden.

In beispielhaften Ausführungsformen ist die Optimierungsfunktion ein Teil des mathematischen Modells. Mit anderen Worten umfasst das mathematische Modell in beispielhaften Ausführungsformen die Optimierungsfunktion. Auf diese Weise kann eine gewünschte Optimierung einer zu optimierenden Größe vorteilhaft in dem mathematischen Modell berücksichtigt werden und es ergibt sich ferner vorteilhaft eine weniger komplexe algorithmische Architektur.

Es versteht sich, dass die Formulierungen "Wert eines Parameters" und "Wert für einen Parameter" in der vorliegenden Offenbarung austauschbar verwendet werden.

Es versteht sich ferner, dass Daten im Sinne der vorliegenden Offenbarung, beispielsweise die Sensordaten, die Messdaten, die (Trainings-)eingabedaten, die (Trainings-)ausgabedaten und/oder Daten, die im Folgenden offenbart sind, jedwede Art von Informationen umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können, und die insbesondere zu diesem Zweck auf einem Speichermedium gespeichert werden können, das mit der zumindest einen Steuervorrichtung, dem Prozessor, mit dem System von einem oder mehreren Prozessoren, und/oder mit dem einen oder den mehreren Computern geeignet direkt und/oder indirekt (z.B. direkt, drahtgebunden oder drahtlos) verbunden ist.

Es versteht sich, dass Informationen im Sinne der vorliegenden Offenbarung, beispielsweise die Informationen zu dem zumindest einen Produktionsfaktor und/oder die Informationen, die im Folgenden offenbart sind, jedwede Art von computerlesbarer und/oder elektronisch lesbarer Information umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Einschränkung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Produktionsanlage zum Herstellen einer Baustoffplatte und einer Steuervorrichtung;
- Fig. 2: ein beispielhaftes Flussdiagramm, das ein Verfahren gemäß einer beispielhaften Ausführungsform des genannten Aspekts der Erfindung darstellt;
- Fig. 3: eine schematische Darstellung von beispielhaften Aspekten einer beispielhaften Ausführungsform eines Verfahrens gemäß dem genannten Aspekt der Erfindung;
- Fig. 4: eine schematische Darstellung einer beispielhaften Ausführungsform einer Vorrichtung gemäß dem genannten Aspekt der Erfindung, beispielsweise einer mobilen Vorrichtung.

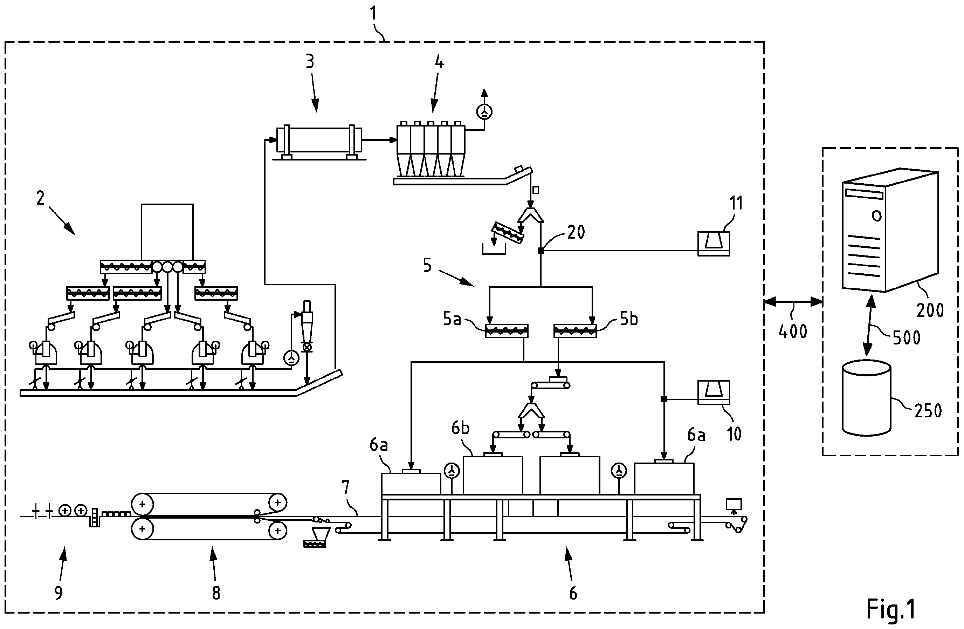

Fig. 1 zeigt eine schematische Darstellung einer beispielhaften Produktionsanlage 1 zum Herstellen einer Werkstoffplatte aus Spanmaterial als illustratives Beispiel einer Baustoffplatte im Einklang mit der vorliegenden Offenbarung. Fig. 1 zeigt weiter eine schematische Darstellung einer Steuervorrichtung 200, die mit der Produktionsanlage 1 zum Steuern und/oder Regeln der Produktionsanlage 1, beispielsweise über die schematisch dargestellte Verbindung 400, verbunden ist. Dazu kann die Steuervorrichtung 200 eingerichtet sein, die Schritte des Verfahrens gemäß des genannten Aspekts der Erfindung auszuführen. Die Steuervorrichtung 200 kann dazu beispielsweise eine Verarbeitungsanlage wie einen Computer und/oder ein Computersystem umfassen, das mit (nicht dargestellten) Sensoren und/oder Messeinrichtungen der Produktionsanlage 1 verbunden ist, beispielsweise um von solchen Sensoren und/oder Messeinrichtungen Soll- und/oder Istwerte von Prozessparametern von Abschnitten oder Einheiten der Produktionsanlage 1 zu erhalten. Alternativ oder zusätzlich kann die Steuervorrichtung 200 in beispielhaften Ausführungsformen eine oder mehrere mobile Vorrichtungen, beispielsweise ein oder mehrere Smartphones, ein oder mehrere Tablett-Computer, und/oder ein oder mehrere Laptops umfassen.

Die Steuervorrichtung 200 umfasst in beispielhaften Ausführungsformen eine oder mehrere Anzeigevorrichtungen, wie beispielsweise einen oder mehrere Bildschirme, und/oder ist mit einer oder mehreren Anzeigevorrichtungen verbunden um beispielsweise Werte für Prozessparameter oder Werte für Qualitätsparameter beispielsweise einer in Produktion befindlichen Baustoffplatte anzuzeigen.

In beispielhaften Ausführungsformen kann die Steuervorrichtung 200 mehrere Steuervorrichtungen umfassen von denen eine einzelne Steuervorrichtung einen oder mehrere Schritte des Verfahrens gemäß dem genannten Aspekt der vorliegenden Erfindung ausführen kann. So kann es beispielsweise möglich sein, dass die in Fig. 1 nur schematisch dargestellte Steuervorrichtung 200 eine Verarbeitungseinheit wie beispielsweise einen oder mehrere Computer umfasst, der mit Sensoren und/oder Messeinrichtungen der Produktionsanlage 1 (drahtlos, drahtgebunden, und/oder über eine Internetverbindung) verbunden ist, und beispielsweise eine mobile Vorrichtung, die zumindest mit der Verarbeitungseinheit (drahtlos, drahtgebunden, und/oder über eine Internetverbindung) verbunden ist. So kann es möglich sein, dass beispielsweise insbesondere Schritte, die eine Anzeige und/oder eine Eingabe von Daten umfassen, in beispielhaften Ausführungsformen eine Anzeige und/oder Eingabe von Daten unter Verwendung (beispielsweise eines Touchscreens) eines mobilen Geräts wie eines Smartphones umfassen.

Fig. 1 zeigt weiter eine Speichervorrichtung (beispielsweise eine oder mehrere Festplatten und/oder einer oder mehrere Cloud-Speichereinheiten), die beispielsweise zum Speichern von Trainingsdatensätzen vorgesehen sein kann und dazu über die schematisch dargestellte Verbindung 500 mit der Steuervorrichtung 200 verbunden ist.

In beispielhaften Ausführungsformen umfassen Verbindungen im Einklang mit der vorliegenden Offenbarung, insbesondere die schematisch dargestellten Verbindungen 400 zwischen der Steuervorrichtung 200 und der Produktionsanlage 1 (beispielsweise zwischen der Steuervorrichtung 200 und einem oder mehreren Sensoren, Messeinrichtungen und/oder Steuercontrollern der Produktionsanlage 1) und 500 insbesondere direkte oder indirekte drahtgebundene Kommunikations-Verbindungen (beispielsweise LAN-Verbindungen), und/oder direkte oder indirekte drahtlose Kommunikations-Verbindungen umfassend Funk-Verbindungen wie Bluetooth, NFC, WLAN, 4G oder 5G und/oder Kommunikations-Verbindungen über das Internet.

Fig. 1 zeigt ein Schema mit Einheiten, Abschnitten oder Aggregaten der Produktionsanlage 1, die zur Herstellung der Baustoffplatten dienen können. Insbesondere sind folgende Abschnitte der Produktionsanlage 1 dargestellt, die für einzelne Produktionsschritte zur Herstellung einer Baustoffplatte verwendet werden können, dargestellt: ein Zerspaner 2, ein Trockner für Späne 3, eine Sichteinrichtung 4, eine Vorrichtung zur Versehung der Späne mit einem Bindemittel mit Mischer 5a, 5b, die stellvertretend auch für andere Vorrichtungen stehen, mit denen Bindemittel auf die Späne gebracht wird, ferner Streueinrichtungen 6, die die beleimten Späne ggf. in mehreren Lagen unterschiedlicher Spangrößen aus mehreren Streuköpfen 6a, 6b auf ein Formportband 7 zu einer Matte streuen, eine kontinuierliche Presse 8 und eine Schneid- oder Fräseinrichtung 9 zur Dimensionierung der fertigen Baustoffplatten.

Dabei stehen die Zerspaner 2 auch symbolisch allgemein für die Zerkleinerung von Holz zu Spänen. In der Figur sind beispielhaft fünf Messerringzerspaner angedeutet, die aus einem darüber liegenden Bunker über Förderschnecken gespeist werden. Diese können je nach Messereinstellung unterschiedliche Spangrößen erzeugen. Die erzeugten Späne unterschiedlicher Größe und Feuchtigkeit werden an den Trockner 3 weitergeleitet.

Die sich in der Figur anschließende Sichteinrichtung 4 kann in unterschiedlichen Ausführungen an verschiedenen Herstellpunkten Verwendung finden. Diese Einrichtung kann verwendet werden, um Feinpartikel (z.B. Staub) bzw. Grobpartikel (z.B. unerwünschte Mineralien oder Leimlumpen) aus dem Fluss der Späne auszusondern.

Sichteinrichtungen 4 können auch genutzt werden, um beispielsweise bei der Streuung bereits eine Fraktionierung nach der Spangröße zu erwirken, so dass unterschiedliche Schichten der späteren Baustoffplatte aus unterschiedlich großen Spänen erzeugt werden können.

In dem Ausführungsbeispiel gemäß Fig. 1 werden beispielsweise zwei unterschiedliche Spangrößenbereiche erzeugt, die aus Bunkern jeweils einem Mischer 5a und einem Mischer 5b zugeführt werden. In diesen Mischern werden die Späne zumindest teilweise mit Bindemittel benetzt.

So ist es möglich, den Streuköpfen 6a für die Deckschichten der zu streuenden und zu verpressenden Matte andere Spangrößen zuzuführen als den Streuköpfen 6b für die Mittelschicht(en).

Die Doppelbandpresse 8, wie sie zur Herstellung von Baustoffplatten, insbesondere Baustoffplatten aus Holzwerkstoffen verwendet wird, weist in ihrem grundsätzlichen Aufbau ein Pressenoberteil mit oberer beheizbarer Druckplatte und ein Pressenunterteil mit unterer beheizbarer Druckplatte auf. Rahmen, in denen auch Druckgeber zur Druckgebung abgestützt sind, verbinden das Pressenoberteil und das Pressenunterteil. Im Pressenoberteil sowie im Pressenunterteil sind endlos umlaufende Stahlbänder unter Bildung eines Pressspaltes für die Druck- und Temperaturbeaufschlagung der Matte um Bandumlenktrommeln geführt.

Ferner erkennt man in Fig. 1 auch eine Spangrößenmesseinrichtung 10 (ein Beispiel einer Messeinrichtung) nach dem Mischer 5. Optional kann auch eine Spangrößenmesseinrichtung 11 vor dem Mischer vorgesehen sein. In diese Spangrößenmesseinrichtung 10, 11 kann eine repräsentative Auswahl von Spänen, beispielsweise eine sehr kleine, aus dem Transportprozess an einer Probenentnahmestelle 20 ausgeschleuste Spanmenge vermessen werden. Beispielhafte Prozessparameter, die in einem Zusammenhang mit solchen durch die Spangrößenmesseinrichtung vermessenen Spänen stehen können sind beispielsweise eine Zuführmenge von Bindemittel über Leimdüsen (ein Beispiel für einen ersten Prozessparameter), eine Zuführmenge von Spänen (ein weiteres Beispiel für einen ersten Prozessparameter), und/oder eine Durchschleusungsgeschwindigkeit von Spänen durch den Mischer 5a, 5b (ein Beispiel für einen zweiten Prozessparameter), eine Drehzahl einer Welle eines Mischers 5a, 5b (ein weiteres Beispiel für einen zweiten Prozessparameter) etc.

Ein Verfahren gemäß dem genannten Aspekt der vorliegenden Offenbarung kann im Zusammenhang mit einer Produktionsanlage gemäß Fig. 1 ausgeführt werden, wobei es sich versteht, dass die vorliegende Erfindung aber nicht auf die Produktionsanlage gemäß Fig. 1 eingeschränkt ist.

Gemäß beispielhafter Ausführungsformen können Prozessparameter insbesondere Prozessparameter der Holzwerkstoffproduktion sein, beispielsweise Prozessparameter eines Zerfaserung und Beleimungsabschnitts einer Produktionsanlage zur Herstellung von Holzwerkstoffplatten, insbesondere ein oder mehrere Prozessparameter umfassen, die ausgewählt sind zumindest aus:
- Quetschwassermenge;
- Dampfzugabe Kocher;
- Füllstand Kocher;
- Temperatur Kocher;
- Dampfdruck Kocher;
- Kochzeit;
- Hackschnitzelmenge;
- Paraffinzugabe;
- Energieaufnahme Refiner;
- Temperatur Refiner;
- Dampfdruck Refiner;
- Mahlspalt Refiner;
- Mahlscheibenalter;
- Blasventilöffnung;
- pH-Wert der Fasern;
- Leimmenge.

In beispielhaften Ausführungsformen können Prozessparameter eines Mattenformungsabschnitts einer Produktionsanlage zur Herstellung von Holzwerkstoffplatten, insbesondere ein oder mehrere Prozessparameter umfassen, die ausgewählt sind zumindest aus:
- Faseraustragsmenge;
- Streuhöhe;
- Formbandgeschwindigkeit;
- Flächengewicht Matte;
- Mattenfeuchte;
- Streubreite;
- Vorpressdrücke;
- Vorpressdistanzen;
- Besäumbreite;
- Mattendichte;
- Sprühwassermenge;
- Mattenhöhe Formbandende;
- Mattentemperatur;
- Bedüsungshöhe;
- Fehlschüttung.

Für solche Prozessparameter können in einer Produktionsanlage entsprechende Sensoren und/oder Messeinrichtungen vorgesehen sein, so dass diesen Prozessparametern entsprechend eingestellte Sollwerte, bzw. Istwerte über entsprechende Kommunikationsverbindungen der zumindest einen Steuervorrichtung zur Verfügung gestellt werden können.

Insbesondere ist es möglich, dass beispielsweise gemessene und/oder eingestellte Soll- bzw. Istwerte bei einer Produktion einer Baustoffplatte zusammen mit entsprechenden Zeitstempeln gespeichert werden, so dass für eine produzierte Baustoffplatte die entsprechenden Werte für Prozessparameter zu den jeweiligen Zeitpunkten zur Verfügung stehen. Wie beschrieben können für Baustoffplattenproben, die beispielsweise für eine Vermessung im Labor ausgeschleust werden zusätzlich noch Messwerte für bestimmte Eigenschaften (z.B. Qualitätsmerkmale) erhalten werden, die zusammen mit den Werten für die Prozessparameter in einem Trainingsdatensatz für die entsprechende Baustoffplattenprobe gespeichert werden können. Ferner können wie ebenfalls beschrieben, zusätzlich noch (Mess-)werte für Umgebungsbedingungen und/oder frühere Prozessparameter in einem Trainingsdatensatz für eine entsprechende Baustoffplattenprobe gespeichert werden.

Gemäß beispielhafter Ausführungsformen sind Qualitätsmerkmale, die eine Baustoffplatte charakterisieren können, insbesondere ein oder mehrere Qualitätsmerkmale, die ausgewählt sind zumindest aus:
- Querzugfestigkeit;
- Biege-E-Modul;
- Rohdichte;
- Biegefestigkeit;
- Abhebefestigkeit
- Dickenquellung.

So umfasst ein Trainingsdatensatz für eine Baustoffplattenprobe in beispielhaften Ausführungsformen Werte (z.B. Soll- und/oder Istwerte) für zumindest einen ersten und/oder zweiten Prozessparameter jeweils mit zugehörigem Zeitstempel, und Werte (z.B. Messwerte und/oder Labormesswerte) für zumindest eine Eigenschaft (z.B. ein Qualitätsmerkmal) einer Baustoffplattenprobe.

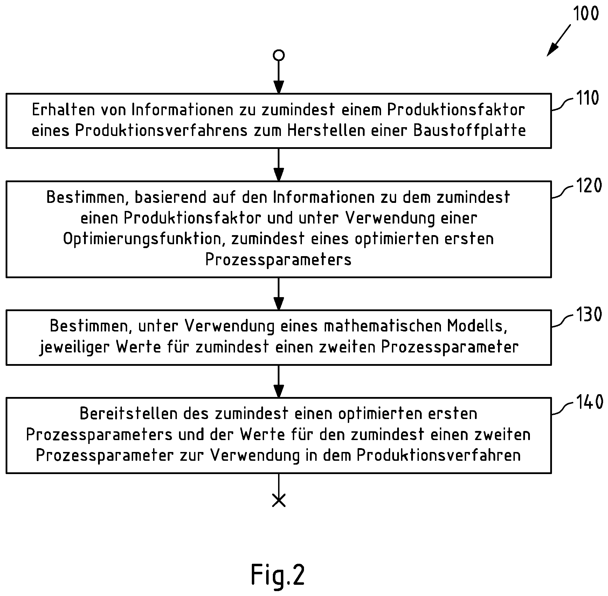

Fig. 2 zeigt ein beispielhaftes Flussdiagramm, das eine beispielhafte Ausführungsform des Verfahrens 100 gemäß dem genannten Aspekt der vorliegenden Erfindung darstellt. Das Flussdiagramm 100 kann als Veranschaulichung eines beispielhaften Verfahrens zum Bereitstellen optimierter Prozessparameter eines Produktionsverfahrens zum Herstellen einer Baustoffplatte beispielsweise mithilfe der Produktionsanlage 1 gemäß Fig. 1 verstanden werden. Ohne Beschränkung der Erfindung darauf, wird im Folgenden davon ausgegangen, dass Verfahren 100 durch die Steuervorrichtung 200 gemäß Fig. 1 ausgeführt wird. Allerdings kann Verfahren 100 in anderen beispielhaften Ausführungsformen von einem oder mehreren Prozessoren der Steuervorrichtung 200 ausgeführt werden, und/oder von mehreren Steuervorrichtungen, wobei beispielsweise einer oder mehrere Prozessoren und/oder eine oder mehrere der Steuervorrichtungen einen oder mehrere Schritte des Verfahrens 100 ausführen kann.

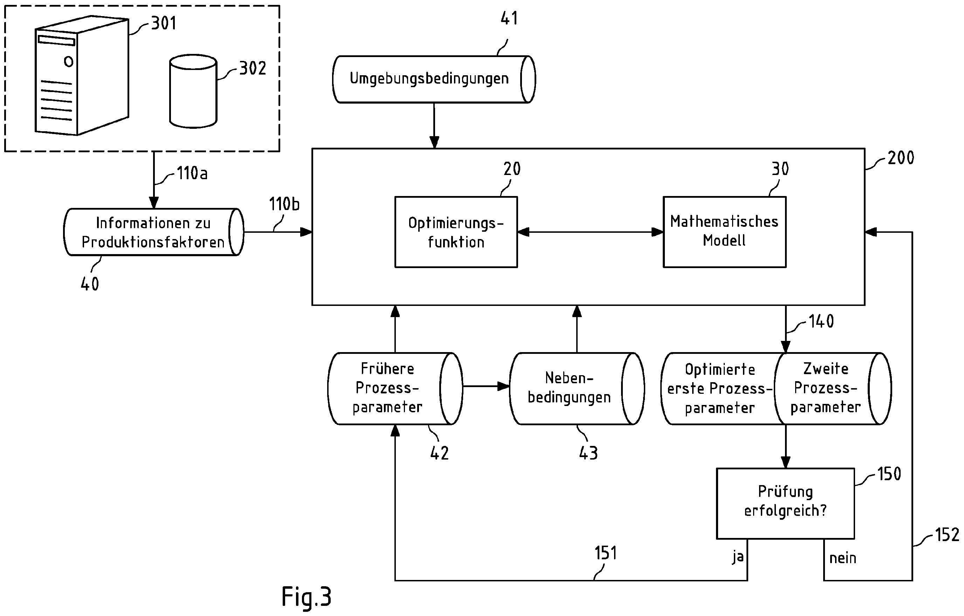

Fig. 3 zeigt eine schematische Darstellung von beispielhaften Aspekten einer beispielhaften Ausführungsform eines Verfahrens gemäß dem genannten Aspekt der Erfindung. Die in Fig. 3 schematisch dargestellten Vorrichtungen, Verfahrensschritte und (Informations-)elemente dienen der Veranschaulichung beispielhafter Aspekte einer beispielhaften Ausführungsform eines Verfahrens gemäß dem genannten Aspekt der vorliegenden Erfindung.

Die Schritte 110 bis 140 des in Fig. 2 dargestellten Verfahrens 100 werden im Folgenden daher unter anderem unter Bezugnahme auf Fig. 3 näher erläutert.

Wie in Fig. 2 dargestellt, umfasst das Verfahren 100 einen Schritt 110 des Erhaltens von Informationen zu zumindest einem Produktionsfaktor eines Produktionsverfahrens zum Herstellen einer Baustoffplatte. Wie in Fig. 3 dargestellt, können die genannten Informationen von der Steuervorrichtung 200 beispielsweise von einem Server 301 (ein Beispiel einer externen Vorrichtung) empfangen oder abgerufen oder aus einer Datenbank 302 (ein Beispiel eines computerlesbaren Speichermediums) abgerufen oder ausgelesen werden (Schritte 110a und 110b). In beispielhaften Ausführungsformen werden die genannten Informationen von einem ERP-System und/oder von einer anderen Quelle erhalten. Die genannten Informationen können beispielsweise zeitabhängigen Kostenparametern wie z.B. Material- und Energiepreisen, Markterlösen, etc. entsprechen. In beispielhaften Ausführungsformen erfolgt die automatische bzw. automatisierte Anpassung der Optimierungsfunktion (z.B. einer Kostenfunktion) und damit die Dynamisierung also durch Kopplung einer Vorrichtung oder eines Systems zur autonomen Prozessführung mit einem kaufmännischen System.

Das in Fig. 2 dargestellte Verfahren 100 umfasst ferner einen Schritt 120 des Bestimmens, basierend auf den Informationen zu dem zumindest einen Produktionsfaktor und unter Verwendung einer Optimierungsfunktion, zumindest eines optimierten ersten Prozessparameters. Dabei basiert der zumindest eine optimierte erste Prozessparameter auf jeweiligen Werten für zumindest einen ersten Prozessparameter des Produktionsverfahrens, die die Optimierungsfunktion optimieren, oder entspricht diesen. Ferner steht jeder des zumindest einen ersten Prozessparameters des Produktionsverfahrens mit zumindest einem des zumindest einen Produktionsfaktors des Produktionsverfahrens in Zusammenhang. Das Bestimmen 120 kann dabei beispielsweise mithilfe der in Fig. 3 dargestellten Optimierungsfunktion 20 erfolgen. Wie in Fig. 3 dargestellt, kann das Bestimmen 120 der optimierten ersten Prozessparameter ferner beispielsweise Umgebungsbedingungen 41, unter denen das Produktionsverfahren ausgeführt wird, berücksichtigen. Wie weiter in Fig. 3 dargestellt, kann das Bestimmen 120 der optimierten ersten Prozessparameter ferner beispielsweise frühere Prozessparameter 42 berücksichtigen. Wie ferner in Fig. 3 dargestellt, können die früheren Prozessparameter 42 beispielsweise solchen Werten für erste und/oder zweite Prozessparameter entsprechen oder auf diesen basieren, die zu einem früheren oder vorherigen Zeitpunkt mithilfe des Verfahrens 100 bestimmt und bereitgestellt wurden (vgl. Schritte 140 und 151 in Fig. 3). Die früheren Prozessparameter 42 können dabei beispielsweise eine frühere Anlagensituation charakterisieren. Wie in Fig. 3 schematisch dargestellt, kann die Optimierungsfunktion 20 beispielsweise zumindest zeitweise auf der Steuervorrichtung 200 gespeichert sein.

In beispielhaften Ausführungsformen ist die Optimierungsfunktion 20 eine Kostenfunktion (oder Kostenberechnungsfunktion) C(t, P), die sowohl von der Zeit t als auch von kostenrelevanten regelbaren Prozessgrößen P (ein Beispiel des zumindest einen ersten Prozessparameters) abhängt, und in die die aktuellen Material- und Energiepreise und die am Markt erzielbaren Preise für eine herzustellende Baustoffplatte einfließen, die beispielsweise zeitlich variabel sein können. Beispielsweise kann der am Markt erzielbare Preis für eine herzustellende Baustoffplatte als (Gewichtungs-)Faktor für die regelbare Anlagengeschwindigkeit eingehen, kann der Holzpreis als (Gewichtungs-)Faktor für das regelbare Flächengewicht und damit eine Dichte einer herzustellenden Baustoffplatte bei vorgegebener Dicke eingehen, kann der Leimpreis als (Gewichtungs-)Faktor für den sogenannten Beleimungsfaktor eingehen, und/oder kann der Energiepreis für Gas, Öl, Biomasse etc. als Gewichtungsfaktor für einen regelbaren Energieträgereinsatz eines Heizkraftwerkes und/oder eine regelbare Vorlauftemperatur von Thermoöl eingehen, um einige nicht-einschränkende Beispiele zu nennen. Auf diese Weise kann im Falle der Verwendung einer Kostenfunktion als Optimierungsfunktion dann beispielsweise ermittelt werden, ob es vorteilhaft ist, den Beleimungsfaktor zu erhöhen (und damit mehr Leim zu dosieren), dafür aber mit höherer Geschwindigkeit Baustoffplatten herstellen zu können, beispielsweise weil aktuell ein am Markt erzielbarer Erlös (ein Beispiel eines Verkaufspreises) für die herzustellende Baustoffplatte hoch ist, oder ob es umgekehrt vorteilhafter ist, die Anlagengeschwindigkeit zu senken, um dafür Leim einsparen zu können, beispielsweise weil ein am Markt erzielbarer Verkaufsreis niedrig, aber der Leimpreis hoch ist. Es versteht sich, dass die vorstehenden Erläuterungen lediglich beispielhaft sind und nicht als einschränkend zu verstehen sind.

Das in Fig. 2 dargestellte Verfahren 100 umfasst ferner einen Schritt 130 des Bestimmens, unter Verwendung eines mathematischen Modells, jeweiliger Werte für zumindest einen zweiten Prozessparameter des Produktionsverfahrens. Dabei werden die jeweiligen Werte für den zumindest einen zweiten Prozessparameter derart bestimmt, dass bei einer Ausführung des Produktionsverfahrens basierend auf dem zumindest einen optimierten ersten Prozessparameter und auf den Werten für den zumindest einen zweiten Prozessparameter zumindest eine mit der Baustoffplatte in Zusammenhang stehende Nebenbedingung eingehalten wird. Wie in Fig. 3 dargestellt, können beispielsweise sowohl die Optimierungsfunktion 20 als auch das mathematische Modell 30 lokal auf der Steuervorrichtung 200 gespeichert sein. Wie ferner in Fig. 3 dargestellt, können ferner beispielsweise auch Werte, die Umgebungsbedingungen 41 repräsentieren, unter denen das Produktionsverfahren ausgeführt wird, sowie frühere Prozessparameter 42 als Eingabedaten an die Steuervorrichtung 200 und somit insbesondere an das mathematische Modell 30 übergeben werden und von diesem bei der Bestimmung der Werte für die zweiten Prozessparameter berücksichtigt werden. Wie weiter in Fig. 3 dargestellt, werden ferner beispielsweise Werte als Eingabedaten an die Steuervorrichtung 200 und somit insbesondere an das mathematische Modell 30 übergeben, die die mit der Baustoffplatte in Zusammenhang stehenden Nebenbedingungen 43 repräsentieren. In beispielhaften Ausführungsformen umfassen die mit der Baustoffplatte in Zusammenhang stehenden Nebenbedingungen eine einzuhaltende Qualität der Baustoffplatte, z.B. eine online messbare Qualität und/oder eine online vorhergesagte Qualität. Wie durch den Pfeil von den früheren Prozessparametern 42 auf die Nebenbedingungen 43 angedeutet, können insbesondere Werte für online messbare Qualitätseigenschaften (auf denen die Nebenbedingungen 43 beispielsweise basieren können) auf früheren (und z.B. derzeit noch messbaren) Prozessparametern 42 basieren.

In beispielhaften Ausführungsformen ist das mathematische Modell eine Machine Learning Unit, insbesondere zur autonomen Prozessführung. Die Machine Learning Unit kann insbesondere auf Methoden des Reinforcement Learning basieren.

Das in Fig. 2 dargestellte Verfahren 100 umfasst schließlich einen Schritt 140 des Bereitstellens des zumindest einen optimierten ersten Prozessparameters und der Werte für den zumindest einen zweiten Prozessparameter zur Verwendung in dem Produktionsverfahren. Wie in Fig. 3 dargestellt, können die optimierten ersten Prozessparameter und die Werte für die zweiten Prozessparameter beispielsweise zusammen und/oder gleichzeitig von der Steuervorrichtung 200 bereitgestellt werden. Der zumindest eine optimierte erste Prozessparameter und die Werte für den zumindest einen zweiten Prozessparameter können beispielsweise als optimierte Prozesseinstellungen bezeichnet werden.

Wie in Fig. 3 dargestellt, umfasst das Verfahren gemäß dem genannten Aspekt in beispielhaften Ausführungsformen ferner einen Schritt 150 des Prüfens, ob der zumindest eine optimierte erste Prozessparameter und die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter zumindest eine Einschränkung einer Steuerung und/oder einer Regelung des Produktionsverfahrens berücksichtigt wird (z.B. Bunkerfüllstand Trockenspanbunker darf nicht unter 20% sinken). In beispielhaften Ausführungsformen entspricht Schritt 150 also einer technischen und/oder maschinentechnischen Prüfung der Prozesseinstellungen (z.B. der optimierten ersten Prozessparameter und/oder der Werte für die zweiten Prozessparameter).

Wie in Fig. 3 dargestellt, können dann, wenn die Prüfung erfolgreich ist (Zweig "ja"), die optimierten ersten Prozessparameter und die Werte für den zumindest einen zweiten Prozessparameter beispielsweise zur Verwendung in dem Produktionsverfahren bereitgestellt werden. Beispielsweise können die genannten Parameter/Werte, wenn die Prüfung erfolgreich ist, in dem Produktionsverfahren eingestellt werden. Folglich können die genannten Parameter/Werte zu einem späteren Zeitpunkt dann wiederum frühere Prozessparameter darstellen (vgl. Schritt 151).

Wenn die Prüfung nicht erfolgreich ist (Zweig "nein"), wie ebenfalls in Fig. 3 dargestellt, können die optimierten ersten Prozessparameter und die Werte für die zweiten Prozessparameter hingegen beispielsweise verworfen werden und/oder es können unter erneuter Verwendung des mathematischen Modells 30 weitere Werte für den zumindest einen zweiten Prozessparameter bestimmt werden (vgl. Schritt 152).

In beispielhaften Ausführungsformen kann das Verfahren gemäß dem genannten Aspekt beispielsweise, wie vorstehend beschrieben, für eine autonome Prozessführung des Produktionsverfahrens zum Herstellen einer Baustoffplatte verwendet werden. In beispielhaften Ausführungsformen bewertet das Verfahren gemäß dem genannten Aspekt also ausgehend von einer aktuellen Prozesssituation beispielsweise, welche im Band der technisch möglichen/erlaubten Werte für die verschiedenen Prozessparameter unter Berücksichtigung der aktuellen und zeitlich variablen Markt- und Kostensituation z.B. zu optimierten Kosten oder Emissionen führen und stellt diese dann beispielsweise autonom in dem Produktionsverfahren ein. Dies kann beispielsweise als ein dynamischer Vorgang im Sinn eines Echtzeit (Realtime) Regelkreises verstanden werden. Mit anderen Worten wird in beispielhaften Ausführungsformen des Verfahrens gemäß dem genannten Aspekt das eigentliche Optimierungsziel dynamisiert, indem die Bestimmung der optimierten Prozesseinstellungen von einer während des Produktionsverfahrens vorliegenden Situation (beispielsweise eine Kosten- und Marktsituation) abhängig gemacht wird und automatisch und/oder selbsttätig daran angepasst wird. Es versteht sich, dass die vorstehenden Erläuterungen lediglich beispielhaft sind und nicht als einschränkend zu verstehen sind.

Es versteht sich ferner, dass die Optimierungsfunktion 20 und das mathematische Modell 30 in Fig. 3 lediglich zu illustrativen Zwecken und rein beispielhaft als separate Einheiten dargestellt sind. Wie vorstehend bereits ausgeführt, kann die Optimierungsfunktion beispielsweise ein Teil des mathematischen Modells sein.

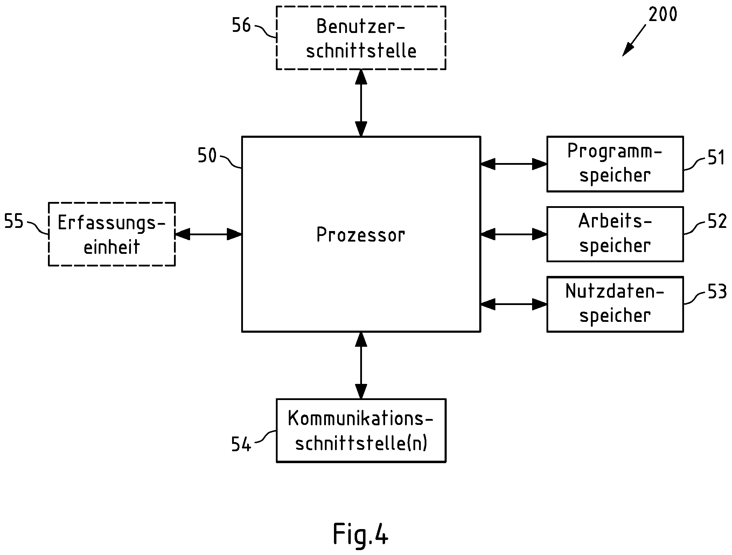

Fig. 4 ist eine schematische Darstellung einer beispielhaften Ausführungsform einer Steuervorrichtung 200, die eingerichtet ist, das Verfahren gemäß dem genannten Aspekt der Erfindung auszuführen. Die Steuervorrichtung 200 kann beispielsweise von einer Steuervorrichtung einer Produktionsanlage umfasst sein.

Die Steuervorrichtung 200 umfasst einen Prozessor 50, einen Programmspeicher 51, einen Arbeitsspeicher 52, einen Nutzdatenspeicher 53, eine oder mehrere Kommuni-kationsschnittelle(n) 54, eine Erfassungseinheit 55 beispielsweise zur Erfassung von Ist- oder Sollwerten für einen oder mehrere Prozessparameter und eine Benutzerschnittstelle 56.

In beispielhaften Ausführungsformen umfasst die Benutzerschnittstelle 56:
- zumindest eine Tastatur und zumindest einen Bildschirm,
- ein oder mehrere Mittel zur Spracheingabe,
- ein oder mehrere Touchscreens, und/oder
- eine mit der Produktionsanlage verbundene mobile Vorrichtung, beispielsweise ein Smartphone, ein Tablett-Computer, einen Laptop.

In beispielhaften Ausführungsformen ist die Benutzerschnittstelle direkt - drahtgebunden und/oder drahtlos - mit der Produktionsanlage und/oder mit der zumindest einen Steuervorrichtung verbunden und/oder beispielsweise über eine Internetverbindung. In beispielhaften Ausführungsformen umfasst eine Benutzerschnittstelle eine Anzeigevorrichtung wie einen oder mehrere Bildschirme und eine Eingabevorrichtung wie eine oder mehrere Tastaturen, eine Computermaus und/oder eine Eingabe-/Ausgabevorrichtung wie einen oder mehrere Touchscreens und/oder Mittel zur Spracheingabe. In beispielhaften Ausführungsformen umfasst die zumindest eine Steuervorrichtung eine mobile Vorrichtung wie ein oder mehrere Smartphones, einen oder mehrere Tablett-Computer und/oder einen oder mehrere Laptops, wobei eine Benutzerschnittstelle insbesondere in diesen Ausführungsformen einen oder mehrere Touchscreens einer mobilen Vorrichtung umfasst. Eine Verbindung der zumindest einen Steuervorrichtung über das Internet kann in vorteilhafter Weise eine Steuerung und/oder Regelung aus der Ferne durch einen Benutzer ermöglichen, was insbesondere dann vorteilhaft sein kann, wenn ein Benutzer für mehrere Produktionsanlagen verantwortlich ist.

Der Prozessor 50 führt beispielsweise ein Programm zur Durchführung des genannten Verfahrens gemäß dem genannten Aspekt der Erfindung aus, das in dem Programmspeicher 51 gespeichert ist. Arbeitsspeicher 52 dient insbesondere der Speicherung temporärer Daten während des Ablaufs dieses Programms.

Der Nutzdatenspeicher 53 dient der Speicherung von Daten, die bei der Abarbeitung des Programms erforderlich sind und kann dem Speichermedium 250 der Figur 1 entsprechen.

Die Kommunikationsschnittstelle(n) 54 umfassen eine oder mehrere Schnittstellen zur Kommunikation der Vorrichtung insbesondere mit der Produktionsanlage 1 und/oder zumindest mit Teilen (beispielsweise einem oder mehreren Sensoren und/oder einer oder mehrerer Messeinrichtungen) der Produktionsanlage 1. Die Schnittstelle kann auf einer drahtgebundenen und/oder drahtlosen (beispielsweise auf zellularem Mobilfunk (z.B. GSM, E-GSM, UMTS, LTE, 5G) oder auf WLAN (Wireless Local Area Network)) beruhen.

Die Benutzerschnittstelle 56 kann als Bildschirm und Tastatur oder als berührungsempfindliche Anzeige (Touchscreen) ausgestaltet sein. Die Benutzerschnittstelle 56 kann direkt (beispielsweise drahtgebunden) mit Prozessor 50 und/oder der Steuervorrichtung 200 verbunden sein, und/oder (es können mehrere Benutzerschnittstellen 56 vorgesehen sein) über eine drahtgebundene und/oder drahtlose (z.B. auf GSM, E-GSM, UMTS, LTE, 5G und/oder auf WLAN (Wireless Local Area Network) Technologie beruhende) Kommunikationsverbindung, beispielsweise eine Internetverbindung umfassende Kommunikationsverbindung mit Prozessor 50 und/oder der Steuervorrichtung 200 verbunden sein. Im letzteren Fall kann so eine Remoteverbindung zur Steuervorrichtung 200 ermöglicht werden, die es beispielsweise einem Benutzer ermöglicht, aus der Ferne auf die Steuervorrichtung 200 zuzugreifen, und so ggf. mehrere Steuervorrichtungen 200 zu bedienen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten oder dergleichen bedeutet im Zusammenhang dieser Spezifikation mehrere Einheiten oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, beispielsweise ausgeführt durch zumindest eine Vorrichtung oder ein System umfassend zumindest zwei Vorrichtungen, wobei das Verfahren umfasst:
- Erhalten von Informationen zu zumindest einem Produktionsfaktor eines Produktionsverfahrens zum Herstellen einer Baustoffplatte;
- Bestimmen, basierend auf den Informationen zu dem zumindest einen Produktionsfaktor und unter Verwendung einer Optimierungsfunktion, zumindest eines optimierten ersten Prozessparameters, wobei der zumindest eine optimierte erste Prozessparameter auf jeweiligen Werten für zumindest einen ersten Prozessparameter des Produktionsverfahrens basiert oder diesen entspricht, die die Optimierungsfunktion optimieren, und wobei jeder des zumindest einen ersten Prozessparameters des Produktionsverfahrens mit zumindest einem des zumindest einen Produktionsfaktors des Produktionsverfahrens in Zusammenhang steht;
- Bestimmen, unter Verwendung eines mathematischen Modells, jeweiliger Werte für zumindest einen zweiten Prozessparameter des Produktionsverfahrens derart, dass bei einer Ausführung des Produktionsverfahrens basierend auf dem zumindest einen optimierten ersten Prozessparameter und auf den Werten für den zumindest einen zweiten Prozessparameter zumindest eine mit der Baustoffplatte in Zusammenhang stehende Nebenbedingung eingehalten wird; und
- Bereitstellen des zumindest einen optimierten ersten Prozessparameters und der Werte für den zumindest einen zweiten Prozessparameter zur Verwendung in dem Produktionsverfahren.

2. Das Verfahren gemäß Anspruch 1, wobei die Optimierungsfunktion von dem zumindest einen ersten Prozessparameter abhängig ist und/oder wobei die Optimierungsfunktion von dem zumindest einen zweiten Prozessparameter unabhängig ist.

3. Das Verfahren gemäß einem der Ansprüche 1 oder 2, wobei das Verfahren weiter umfasst:
- Steuern und/oder Regeln des Produktionsverfahrens zum Herstellen einer Baustoffplatte basierend auf dem zumindest einen optimierten ersten Prozessparameter und auf den Werten für den zumindest einen zweiten Prozessparameter.

4. Das Verfahren gemäß einem der Ansprüche 1 bis 3, wobei das Verfahren weiter umfasst:
- Prüfen, ob der zumindest eine optimierte erste Prozessparameter und die Werte für den zumindest einen zweiten Prozessparameter derart sind, dass bei einer Ausführung des Produktionsverfahrens basierend auf dem zumindest einen optimierten ersten Prozessparameter und auf den Werten für den zumindest einen zweiten Prozessparameter zumindest eine Einschränkung einer Steuerung und/oder einer Regelung des Produktionsverfahrens berücksichtigt wird; und
o in einem Fall, in dem die Prüfung erfolgreich ist, Bereitstellen des zumindest einen optimierten ersten Prozessparameters und der Werte für den zumindest einen zweiten Prozessparameter zur Verwendung in dem Produktionsverfahren;
o in einem Fall, in dem die Prüfung nicht erfolgreich ist, Verwerfen der Werte für den zumindest einen zweiten Prozessparameter und/oder Bestimmen weiterer Werte für den zumindest einen zweiten Prozessparameter.

5. Das Verfahren gemäß Anspruch 4, wobei die zumindest eine Einschränkung der Steuerung und/oder der Regelung des Produktionsverfahrens durch eine Produktionsanlage zur Ausführung des Produktionsverfahrens bedingt und/oder durch einen Anwender des Produktionsverfahrens vorgegeben ist.

6. Das Verfahren gemäß einem der Ansprüche 1 bis 5, wobei die Einhaltung der zumindest einen mit der Baustoffplatte in Zusammenhang stehenden Nebenbedingung einer Einhaltung zumindest eines vorgegebenen Qualitätskriteriums für die Baustoffplatte entspricht.

7. Das Verfahren gemäß Anspruch 6, wobei das zumindest eine vorgegebene Qualitätskriterium für die Baustoffplatte während des Produktionsverfahrens messbar und/oder vorhersagbar ist.

8. Das Verfahren gemäß einem der Ansprüche 1 bis 7, wobei das Verfahren weiter umfasst:
- Erhalten von Informationen zu zumindest einer Umgebungsbedingung, unter der das Produktionsverfahren ausgeführt wird, und/oder
- Erhalten jeweiliger Werte für zumindest einen früheren Prozessparameter des Produktionsverfahrens;
- wobei das Bestimmen der Werte für den zumindest einen zweiten Prozessparameter auf den Informationen zu der zumindest einen Umgebungsbedingung und/oder auf den Werten für den zumindest einen früheren Prozessparameter basiert.

9. Das Verfahren gemäß einem der Ansprüche 1 bis 8, wobei das Erhalten von Informationen zu dem zumindest einen Produktionsfaktor zumindest eines umfasst von:
- Empfangen der Informationen von zumindest einer externen Vorrichtung; und/oder
- Auslesen der Informationen aus zumindest einem internen oder externen computerlesbaren Speichermedium.

10. Das Verfahren gemäß einem der Ansprüche 1 bis 9, wobei das Verfahren weiter ein Erhalten des mathematischen Modells umfasst, und wobei das Erhalten des mathematischen Modells Folgendes umfasst:
- Erhalten zumindest eines Trainingsdatensatzes umfassend Trainingseingabedaten und Trainingsausgabedaten; und
- Erzeugen des mathematischen Modells basierend auf dem zumindest einen Trainingsdatensatz.

11. Das Verfahren gemäß Anspruch 10, wobei das Erzeugen des mathematischen Modells basierend auf dem zumindest einen Trainingsdatensatz ein Bestimmen zumindest eines Modellparameters des mathematischen Modells umfasst, derart, dass das mathematische Modell bei Verwendung der Trainingseingabedaten als Eingabedaten Ausgabedaten ausgibt, die sich um weniger als ein vorgegebenes Maß von den Trainingsausgabedaten unterscheiden.

12. Das Verfahren gemäß einem der Ansprüche 1 bis 11, wobei die Optimierungsfunktion ein Teil des mathematischen Modells ist.

13. Das Verfahren gemäß einem der Ansprüche 1 bis 12, wobei die Optimierungsfunktion zumindest eines umfasst von:
• einer Kostenfunktion;
• einer Gewinnfunktion;
• einer Emissionsfunktion; und/oder
• einer Nachhaltigkeitsfunktion.

14. Vorrichtung oder System aus zumindest zwei Vorrichtungen, eingerichtet zur Ausführung und/oder Steuerung des Verfahrens nach einem der Ansprüche 1-13 oder umfassend jeweilige Mittel zur Ausführung und/oder Steuerung der Schritte des Verfahrens nach einem der Ansprüche 1-13.

15. Computerprogramm, umfassend Programmanweisungen, die einen Prozessor oder mehrere Prozessoren zur Ausführung und/oder Steuerung des Verfahrens gemäß einem der Ansprüche 1-13 veranlassen, wenn das Computerprogramm auf dem Prozessor oder den mehreren Prozessoren ausgeführt wird.

16. Baustoffplatte, hergestellt durch ein Verfahren umfassend das Verfahren nach einem der Ansprüche 1-13.
